(19) **Europäisches Patentamt / European Patent Office / Office européen des brevets**

(11) **EP 4 270 862 B1**

(12) **EUROPEAN PATENT SPECIFICATION**

(45) Date of publication and mention of the grant of the patent:
**15.07.2026 Bulletin 2026/29**

(21) Application number: **22382418.6**

(22) Date of filing: **29.04.2022**

(51) International Patent Classification (IPC):
**H04L 9/08** (2006.01)  **H04L 9/30** (2006.01)
**H04L 9/32** (2006.01)

(52) Cooperative Patent Classification (CPC):
**H04L 9/0841; H04L 9/304; H04L 9/3093; H04L 9/3231**

(54) **COMPUTER-IMPLEMENTED METHODS FOR POST-QUANTUM PROTECTION OF INFORMATION AND FOR POST-QUANTUM SECURE INFORMATION MATCHING AND CRYPTOGRAPHIC SYSTEMS TO PERFORM THE COMPUTER-IMPLEMENTED METHODS**

COMPUTERIMPLEMENTIERTE VERFAHREN ZUM POST-QUANTUM-SCHUTZ VON INFORMATIONEN UND ZUR POST-QUANTUMSICHEREN INFORMATIONSANPASSUNG UND KRYPTOGRAPHISCHE SYSTEME ZUR DURCHFÜHRUNG DER COMPUTERIMPLEMENTIERTEN VERFAHREN

PROCÉDÉS MIS EN OEUVRE PAR ORDINATEUR POUR LA PROTECTION POST-QUANTIQUE D'INFORMATIONS ET POUR LA MISE EN CORRESPONDANCE D'INFORMATIONS SÉCURISÉES POST-QUANTIQUES ET SYSTÈMES CRYPTOGRAPHIQUES POUR METTRE EN OEUVRE LES PROCÉDÉS MIS EN OEUVRE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023 Bulletin 2023/44**

(73) Proprietor: **Universidad de Sevilla**
**41013 Sevilla (ES)**

(72) Inventors:
• **Baturone Castillo, Mª Iluminada**
**SEVILLA (ES)**
• **Arjona López, María Rosario**
**SEVILLA (ES)**
• **López González, Paula**
**SEVILLA (ES)**
• **Román Hajderek, Roberto**
**SEVILLA (ES)**

(74) Representative: **Pons IP**
**Glorieta Rubén Darío 4**
**28010 Madrid (ES)**

(56) References cited:
• **ARJONA ROSARIO ET AL: "A Post-Quantum Biometric Template Protection Scheme Based on Learning Parity With Noise (LPN) Commitments", IEEE ACCESS, IEEE, USA, vol. 8, 2 October 2020 (2020-10-02), pages 182355 - 182365, XP011814437, DOI: 10.1109/ACCESS.2020.3028703**
• **BOS JOPPE ET AL: "CRYSTALS - Kyber: A CCA-Secure Module-Lattice-Based KEM", 2018 IEEE EUROPEAN SYMPOSIUM ON SECURITY AND PRIVACY (EUROS&P), IEEE, 24 April 2018 (2018-04-24), pages 353 - 367, XP033373216, DOI: 10.1109/EUROSP.2018.00032**

**Description**

**OBJECT OF THE INVENTION**

The present invention relates to post-quantum cryptographic methods for protecting sensitive information and matching the protected information. Sensitive information can be represented by noisy data, in the sense that the data associated with identical sensitive information can show some differences among them when they are measured at different times. An example of noisy data is the data obtained from measurements of persons' and things' traits that are univocally associated with their physical entities, such as persons' biometric data.

Thus, it is an object of the invention a computer-implemented method for protecting sensitive information by means of a post-quantum cryptographic algorithm.

Another object of the invention is a computer-implemented method for post-quantum secure information matching, using architectures centered in a client as well as distributed architectures with one or more parties besides the client, all of them protecting the sensitive information extracted by the client and allowing secure electronic transactions carried out by the client.

**BACKGROUND ART**

Interactions are moving from face to face in the physical world to the client-server model in Internet. Nowadays, electronic interactions have skyrocketed. People and things use service requesters, called clients, to request resources or services from providers, called servers. In order to carry out electronic transactions in a secure way, people must be able to prove who they are online. Typically, the person proves: (a) to know a unique secret ('what you know'), (b) to have a unique possession ('what you have'), and/or (c) to be a physical entity ('who you are').

Biometric authentication employs features extracted from biometric traits that are univocally associated with the physical entity of a person (such as fingerprints, iris, faces, etc.) and verification mechanisms that prove the univocal association between the person and his/her features. Features are represented by numeric data. A general biometric recognition scheme includes an enrollment phase and a verification phase. At the enrollment phase, biometric captures of a person are acquired, and discriminative features are extracted and stored as a template. At the verification phase, features are extracted from a fresh biometric captured which are matched to the stored template. The features of genuine persons are similar but not exactly the same. If during matching, the comparison result (typically a distance measurement) is equal or smaller than a maximum dissimilarity (acting as a threshold), the person is successfully authenticated. Otherwise, the authentication fails.

Not only people can be authenticated from biometric traits, but also things can be authenticated from traits that are univocally associated with their physical entity. The discriminative features of a physical thing could be represented as binary data or strings, using, for example, physical unclonable functions (PUFs).

According to the ISO/IEC 24745 standard on biometric information protection, the requirements of biometric protection schemes are irreversibility (or non-invertibiliy), unlinkability (or non-linkability) and revocability (or renewability). Irreversibility ensures that sensitive information about biometric data is not leaked from protected biometric data. Therefore, protected biometric data can be communicated to an external server and can be stored in a data base without revealing sensitive information. Revocability (or renewability) refers to obtain different protected biometric data from the same biometric sample when the same biometric sample has been employed to enroll the person/thing in different biometric systems with different data bases. Unlinkability refers to obtain different protected biometric data from different biometric captures from the same person/thing.

While the data associated with 'what you know' (usually a PIN, a personal identification number, or a password) and 'what you have' (usually a validation code stored or received by a smartphone) are not noisy (and then can be managed using standard cryptographic constructions), the biometric data are noisy (for a genuine person/thing, the data extracted at enrollment can be different to the data extracted at verification until a maximum dissimilarity threshold). Therefore, biometric protection schemes need special cryptographic constructions.

Traditionally, biometric protection schemes have been based on feature transformations and biometric cryptosystems. Feature transformation techniques employ a transformation function to modify the biometric features extracted at the enrollment phase and at the verification phase with a person specific key. At verification phase, transformed features are compared in the transformed domain. The problem is that transformed features contain less information than the original features, which degrades the recognition accuracy obtained without transformation. In biometric cryptosystems, a secure sketch binds the template with a cryptographic key.

Fuzzy Extractors based on error-correcting codes are one of the main constructions that employ secure sketches. At the verification phase, if the difference between the enrollment and verification biometric features is small enough for the error correcting code to recover the correct cryptographic key, the verification is successful. There are two main problems with Fuzzy Extractors. The first one is to find an error-correcting code able to correct the errors of the biometric features. Depending on biometric traits, such codes do not exist or are too complex to be practical. Even if they are found, the recognition accuracy of the biometric cryptosystems is worse than the recognition accuracy of the unprotected systems because the maximum number of errors corrected by the code cannot be made equal to the maximum dissimilarity best adapted to the recognition accuracy of the biometric system. The second problem is that selecting the code with the constraints imposed by the biometric system usually results in a code without enough cryptographic security.

The sensitive information to be protected and authenticated or matched could also come from extracting features of confidential data such as medical images or top-secret military images. In this case, the features could also be noisy since the images employed at enrollment could be similar but not exactly equal to the images employed at matching.

With the availability of large-scale quantum computers in the future, many of the current proposed data protection schemes will be broken. In order to provide long-term security, post-quantum cryptography should be considered. Currently, several post-quantum biometric protection schemes based on lattice cryptography have been proposed. However, further research is needed to improve the performance and security achieved. Concerning performance, real time should be improved at least during verification time in order to make the electronic transactions and service accesses immediate. Another crucial issue to improve is the size of protected biometric data. Nowadays, the protected biometric data in the reported solutions require large sizes.

Concerning security, in 2017, NIST (National Institute of Standards and Technology) began a process with multiple rounds of evaluation to develop standards for post-quantum cryptography. The finalists for the public-key encryption and key-establishment algorithms or Key Encapsulation Mechanisms (KEMs) are: Classic McEliece (using code-based cryptography), CRYSTALS-KYBER (using Module Learning With Errors (M-LWE) as lattice-based cryptography), NTRU (using Ring Learning With Errors (R-LWE) as lattice-based cryptography), and SABER (using Module Learning With Rounding problem (M-LWR) as lattice-based cryptography). According to the published results for these proposals, Classic McEliece provides advantages in terms of protected data size and proven security (the security of the McEliece system has remained stable over 40 years), while KYBER and SABER provide advantages in terms of key sizes and execution times.

The architecture most widely employed for biometric authentication is centered in the client. In a client-centric architecture, all the phases (enrollment and verification) and, thus, all the operations (acquisition, feature extraction, protection, storage and matching) are carried out locally in the own client. The client verifies the person/thing locally and, then, an external server verifies the client on behalf of the person/thing. The problem of this architecture is that there is no evidence outside the client to prove that the person/thing was actually verified. Distributed architectures should be employed to avoid this problem.

In a distributed architecture, acquisition, feature extraction, and protection are performed in the client, but storage and matching are performed on external servers. At the enrollment and verification phases, the client captures, extracts, and protects the sensitive information coming from noisy sources, and sends them to the external servers. At the enrollment, a data base server may store the template that is compared with fresh features at the verification or matching phase. Then, an authentication server may apply the threshold value to the comparison result to match the person/thing or to match the confidential image. In this case, there is an external verification of the user's physical identity or of the confidential image. The problem of this architecture is that, since communication, storage and verification of confidential data (like those associated with identities) are performed in the cloud, the privacy of the person/things should be preserved. The authentication server can act as identification server, which selects the comparison result with the minimum value (among several results) and then identifies the matched template.

The publication entitled "A Post-Quantum Biometric Template Protection Scheme Based on Learning Parity With Noise (LPN) Commitments" by Arjona Rosario et al, constitutes relevant prior-art.

## DESCRIPTION OF THE INVENTION

The invention is referred to methods and systems to protect and match sensitive information that could be represented by noisy data, in the sense that the data associated with identical sensitive information can show some differences among them when they are measured at different times, and to methods and systems allowing secure electronic transactions between parties.

The invention is defined by the claims as appended.

A first object of the invention is a computer-implemented method for protecting sensitive information. The method comprises the step of generating a set of N private strings xU(i), i being a number between 1 and N, or a pair of private and public keys (skA, pkA).

In case of generating the N private strings xU(i), a set of N uniform random k-bit strings, skU(i), previously generated is used to convert them to private strings xU(i). This conversion is performed by using a binary $n * k$ matrix G, which is a generator matrix of a code of dimension n and rank k, when using post-quantum cryptographic algorithms based on the decoding problem for random binary linear codes or a matrix related to a Learning With Errors problem, with n

3

samples and k guesses, when using post-quantum cryptographic algorithms based on the hardness of lattice problems.

Alternatively, in case of generating private and public keys (skA, pkA), a Key-Generation algorithm of the agreed binary-linear-codes-based post-quantum cryptographic algorithms or of the agreed lattice-based post-quantum cryptographic algorithms is used.

Then, the method comprises a step of obtaining sensitive information which needs to be protected and maybe shared. The sensitive information is represented by a set of features that, in turn, are represented by binary data, which preserve the distances between the features, thus, creating a binary string sUe. The binary string sUe is divided into N substrings sUe(i) having z(i) bits each one, wherein z(i) is equal or smaller than $n$ and, in case of using a binary linear code or Learning With Errors problem, being z(i) equal or greater than a fixed maximum number of errors (t). The variable i is a number between 1 and N, representing each substring.

The binary data obtained associated with sensitive information could come from non-binary data, which are previously binarized preserving the distances between them, by using algorithms for binarization that preserve the distances between each pair of data, thus, creating the binary string sUe.

In particular, the sensitive information could come from measuring traits that are univocally associated with a person or another physical entity, or could come from extracting features of confidential data such as medical images or top-secret military images. Also, the sensitive information could be represented by a set of biometric features, since these features are adequate to be protected and/or shared as binary strings by using binarization techniques which preserve the distances.

Then, strings bUe(i) are calculated by applying a padding, which preferably is secret, to each of the substrings sUe(i). The strings bUe(i) have n bits each one.

Also, other features could also be included in the sensitive information to be protected. In this case, the other features could also be binarized (if they are non-binary data), preserving distances for creating a binary string sUo. Then, the binary string sUo is divided into N substrings sUo(i) with n bits each one. In this case, the strings eUe(i) are defined as:

$$eUe(i) = bUe(i) \; XOR \; sUo(i)$$

In case that no more sensitive information is added, eUe(i) is equal to bUe(i).

The strings eUe(i) are transformed into the strings cBe(i) as:

$$cBe(i) = xU(i) \; XOR \; eUe(i)$$

in case of having generated the private strings xU(i).

Alternatively, the strings eUe(i) are transformed into the strings cBe(i) as:

$$cBe(i) = PQ.\,Encode/PQ.\,Encrypt \; (pkA, eUe(i))$$

in case of having generated (skA, pkA) and wherein PQ.Encode/PQ.Encrypt is an encoding or encryption algorithm of the agreed post-quantum cryptographic algorithms.

Also, on computing the strings eUe(i), it has to be ensured that the Hamming weight of the strings is greater than t, except for the case wherein the algorithm PQ.Encrypt, associated with the lattice-based problems, is used.

Another object of the invention is a computer-implemented method for secure information matching, which could be used at a verification phase in combination with the method for protecting information explained, which would be used at an enrollment phase. The method for secure information matching could be performed by one party, configured to obtain and protect sensitive information at an enrollment phase and to match the sensitive information obtained at the verification phase with strings cBe(i) previously stored at the enrollment phase, being obtained by using the method for protecting information explained before. Strings cBe(i) represent protected sensitive information as protected template, stored for example in a database, to which the sensitive information is compared to be matched. Previously, a threshold value of dissimilarity Th is agreed.

Then, a verification phase comprises a step of obtaining some sensitive information for being matched, which as in the previous method could be represented by a set of biometric features.

As in the enrollment phase, in the verification phase the numeric data associated with the sensitive information are binarized, if they are non-binary data, by using algorithms for binarization that preserve the distances between each pair of data, thus, creating a binary string sUv. The string sUv is divided into N substrings sUv(i) with z(i) bits each one, wherein z(i) is equal or greater than t if using a code-based cryptosystem or a Learning With Errors problem, and equal or smaller than $n$. The N substrings are represented by the variable i, which is a number between 1 and N.

Then, strings bUv(i) are calculated by applying the same padding, which is equal to the one used at the enrollment phase and, preferably, is secret, to each of the substrings sUv(i), as done with bUe(i) when calculating the cBe(i). The strings bUv(i) have n bits each one.

As in the previous method used at the enrollment phase, other features could also be included in the sensitive information to be protected and authenticated. In this case, the other features are also binarized (if they are non-binary data), preserving distances, for creating a binary string sUo'. Then, the binary string sUo' is divided into N substrings sUo(i)' with n bits each one. In this case, the strings eUv(i) are defined as:

$$eUv(i) = bUv(i) \; XOR \; sUo(\text{i})'$$

In case that no more sensitive information is added, eUv(i) is equal to bUv(i).

Then, retrieving the strings cBe(i) that represent the original sensitive information to compare with and which have been previously stored, for example in a database.

Then, the method comprises a step of calculating:

$$cBe(i) \; XOR \; eUv(i)$$

Then, a decoding algorithm of binary linear codes is applied to the result of the calculation for obtaining xU(i)'; and eUe(i)' and dif_sU(i)' are calculated as:

$$eUe(i)' = xU(i)' XOR \; cBe(i)$$

$$dif\_sU(i)' = eUe(i)' XOR \; eUv(i)$$

Then, a distance D suitable for measuring the level of dissimilarity between the two binary vectors is computed from the dif_sU(i)'. For example, a Hamming distance is computed as:

$$HD = \sum_{i=1}^{N} Hamming \; Weight(dif\_sU(i)')$$

Other distances, such as the Jaccard distances could be computed.

The sensitive information is matched, such that if the distance D (for example, HD) is greater than a threshold Th, previously fixed, then matching failure is concluded and else, matching success is concluded.

In order to cope with sensitive information coming from several sources, several (j) distances D(j) could be computed. For example, Hamming distances could be calculated as:

$$HD(j) = \sum_{i=j}^{j+m} Hamming \; Weight(dif\_sU(i)')$$

In this case, the sensitive information is matched, such that if values obtained from the distances D(j) (for example, from the HD(j)) are equal or smaller than a function, such as a weighted average, of the thresholds Th(j), previously fixed, then matching success is concluded and else, matching failure is concluded.

In this case, within the strings eUe(i), used for calculating *dif_sU(i)'*, there may be data referring to different biometric features, for example faces and veins. In this case, the summation does not consider the total interval from i=1 to N, but a subinterval from j to j+m. The idea of this statement is to contemplate multimodal biometrics. When contemplating multimodal biometrics, N would be greater than in a unimodal case and a global threshold can be employed, computed as a function, such as a weighted average, of the unimodal thresholds Th(j).

Optionally, a hash function H could be previously agreed and strings H(skU(i)) could be previously stored in an enrollment phase, and then, the step of matching can also comprise the steps of: applying a decoding algorithm of binary linear codes to also obtain skU(i)', determining if the step of obtaining xU(i)' and skU(i)' does not allow to recover all the components, then concluding matching failure; and applying the agreed hash function to the calculated skU(i)' and retrieving the strings H(skU(i)) previously stored, so that if H(skU(i)') = H(skU(i)) for all i, then concluding matching success, else concluding matching failure.

Optionally, the party configured to match the information, could carry out secure electronic transactions, wherein at an enrollment phase an adequate number of bits from the set of strings skU(i) is selected to generate a cryptographic key by using an agreed key-generation algorithm. The method for secure information matching further comprising in this case the step of:

- if matching is successful, selecting the adequate bits from the set of calculated strings skU(i)', reconstructing the cryptographic key by using the agreed key-generation algorithm, and using the reconstructed key to carry out secure electronic transactions. Therefore, the party does not need to store the cryptographic key in a secure non-volatile memory but can reconstruct it whenever required by providing the authentic information.

A third object of the invention is a method for secure information matching performed by at least two parties. In this case, a first party is a client configured to obtain and protect sensitive information during the enrollment and verification phases. The method also includes an authentication party configured, at a verification phase, to match the sensitive information with the sensitive information in the form of strings cBe(i), previously stored as a template at an enrollment phase, being obtained by using the method for protecting information explained. Also, the method could comprise one or more auxiliary parties. Moreover, the method could be based on post-quantum cryptographic algorithms based on the decoding problem for random binary linear codes or on the hardness of lattice problems.

The method, in this case, comprises the step of establishing secure communications between the client and the other parties, the authentication party and/or the auxiliary parties, considering that the authentication party and/or the auxiliary parties share information in a secure way between them.

The step of establishing secure communications between the client and another party comprises the stages of computing, by the other party, a ciphertext c and a shared secret K by using an encapsulation algorithm of an agreed Key Encapsulation Mechanism (KEM) and using an ephemeral public key pk received from the client and generated by the client by employing a key-generation algorithm of the KEM. Then, the other party uses its long-term private key skA to calculate another shared secret KA' by applying a decapsulating algorithm to a ciphertext cA received from the client and generated by the client, as well as KA, by employing the encapsulation algorithm and the long-term public key pkA. A shared key KUA is calculated by obtaining a hash of the shared secrets K and KA'. Then, the ciphertext c is sent to the client. Thus, the client is able to obtain the shared secret K' by decapsulating the received ciphertext c using the ephemeral private key sk (associated with pk) and then computes the shared key KUA' from the hash of the shared secrets K' and KA.

The step of establishing secure communications could be performed multiple times between the first party and each of the other parties.

The method also comprises the step of using an agreed symmetric encryption scheme by one of the authentication party or the auxiliary parties to decrypt, with KUA, shared with the client, N strings cBv(i)'. The N strings cBv(i) are obtained by the client by applying the steps of the method for protecting sensitive information to be authenticated at a verification phase, using post-quantum cryptographic algorithms and using the long-term public key of the authentication party. The client encrypts the strings cBv(i), using the agreed symmetric encryption scheme, with KUA', which must be coincident with KUA, wherein KUA' is obtained by the client by applying a hash function to KA and to K', which is obtained by the client by decapsulating the received ciphertext c using the ephemeral private key sk, associated with pk generated by the client by employing a key-generation algorithm of the KEM. Then, the client sends the encrypted cBv(i) to the other party.

Also, N strings cBe(i) were obtained previously at an enrollment phase representing protected sensitive information as protected template.

Then, the variables EU(i) are calculated as:

$$EU(i) = cBv(i)' \, XOR \, cBe(i)$$

if a code-based cryptosystem is employed or:

$$EU(i) = cBv(i)' - cBe(i)$$

if a lattice-based cryptosystem is employed that uses integer arithmetic module q, with q>2 (the subtraction operator module q is used instead of the XOR operator).

Then, N strings dif_sU(i) are computed by the authentication party, by using the long-term private key skA and the decoding algorithm (PQ.Decode) or the decryption algorithm (PQ.Decrypt), as:

$$dif\_sU(i) = PQ.Decode/PQ.Decrypt \, (EU(i));$$

In the case of using the dif_sU(i) for matching, the matching is performed by determining if decoding is possible, if it is not possible concluding matching failure, and computing the sum of the Hamming weights of the N strings dif_sU(i), such that if the result is greater than the threshold Th, then concluding matching failure, and else concluding matching success.

In a particular embodiment of the method defined before, the other parties configured to match the sensitive information are an authenticator and a matcher.

In this case, the step of establishing secure communications between the client and the authentication party and the auxiliary party is performed between the client and the authenticator and between the client and the matcher, assuming that the communication between the matcher and the authenticator is secure.

Also, the steps of computing the N strings cBv(i)', obtaining the N strings cBe(i), and calculating the variables EU(i) are performed by the matcher, which sends the information to the authenticator to perform the steps of computing N strings dif_sU(i).

In another particular case, the authentication party could be an identifier, and the multiple strings cBe(i) are previously obtained as template at the enrollment phase. In this case, the method further comprises the steps of repeating the steps of calculating the variables EU(i) and dif_sU(i) for each of the multiple strings cBe(i) previously obtained; computing multiple Hamming distances as the sum of the Hamming weights of the N strings *dif_sU(i)* calculated for each of the multiple strings cBe(i); and ranking the strings cBe(i) according to their Hamming distances. This allows both, determining the minimum Hamming distance, such as in person identification, and determining the most similar, such as in image retrieval.

The method defined before could comprise steps for increasing the level of security by generating a set of strings mA(i) by choosing a nonce as a binary string, encrypting said strings mA(i) with KUA, sending them encrypted to the client, and receiving encrypted strings mU(i) from the client, decrypting them as mU(i)' and applying both to the N strings dif_sU(i), which results as:

$$dif\_sU(i) = PQ.Decode(skA, EU(i) \; XOR \; mU(i)' \; XOR \; mA(i));$$

if a code-based cryptosystem is employed; or:

$$dif\_sU(i) = PQ.Decrypt(skA, EU(i)) \; XOR \; mU(i)' \; XOR \; mA(i);$$

if a lattice-based cryptosystem is employed; and wherein the N strings cBv(i) are calculated by the client as:

$$cBv(i) = PQ.Encode(pkA, eUv(i)) \; XOR \; mU(i) XOR \; mA(i)'$$

if a code-based cryptosystem is employed or:

$$cBv(i) = PQ.Encrypt(pkA, eUv(i) \; XOR \; mU(i) \; XOR \; mA(i)')$$

if a lattice-based cryptosystem is employed; wherein mA(i)' are obtained by the client by decrypting with KUA' the encrypted mA(i) received.

In the methods defined, when the agreed post-quantum cryptographic algorithms used are a code-based public-key cryptosystem to protect the information, for example biometric data, it could be a McEliece, or a Niederreiter system, so that the encoding, PQ.Encode, and decoding, PQ.Decode, algorithms correspond to the encoding and decoding algorithms of those cryptosystems. More particularly, the code-based public-key cryptosystem employed could be a Classic McEliece cryptosystem or a BIKE system.

The PQ.Encode and PQ.Decode algorithms are those related to the encoding and decoding of random binary linear codes. The problem of decoding random binary linear codes presents non-polynomial (NP) order complexity for both conventional and quantum computers, so it is a "post-quantum" problem.

We define a binary linear code as a k-dimensional subspace of binary vectors of length n (codewords are binary vectors of length n). The decoding problem is that, given a noisy version x= c + e of a codeword c with a noise vector e (binary of size n) with Hamming weight w, we have to find the codeword c or, equivalently, find the noise e. In order to decode, w must be smaller than or equal to the maximum number of errors t that can be corrected with the code. There are several efficient algorithms in the literature for decoding. Nevertheless, if w is greater than t, the decoding problem cannot be solved.

There are two classical public key cryptosystems based on the random binary linear code decoding problem, McEliece's and Niederreiter's, which have been improved over time. Currently, the most efficient versions are the Classic McEliece (based on Goppa codes) and the BIKE (based on QC-MDPC codes). They systematize and analyze all the steps that are carried out in a cryptosystem.

In a McEliece cryptosystem, the ciphertext x has the form x=PQ.Encode(G,e)= G*a + e, where G is the n*k random matrix generating the code and e is always used with a fixed Hamming weight of t, to operate with controlled security (a and e are independent random vectors, a of length k and e of length n). Given x and G (the public key of the cryptosystem is related to G), the decoding problem, PQ.Decode, is an NP problem consisting of finding e (equivalently, finding a). If e has a Hamming weight equal or smaller than t, it can be decoded. If e has a Hamming weight greater than t, it cannot be decoded.

In a Niederreiter cryptosystem, the ciphertext x has the form x=PQ.Encode(H,e) = H*e, where H is the parity check matrix of the code (there is only one H and G for a given code) and e is always used with a fixed Hamming weight of t, to operate with controlled security. Niederreiter is the dual version of McEliece, which allows working with smaller matrices (H is of size (n-k)*n and can be reduced to a matrix of size (n-k)*k). Given x and H (the public key of the cryptosystem is related to H), the decoding problem, PQ.Decode, is an NP problem consisting of finding e. If e has a Hamming weight equal or smaller than t, it can be decoded. If e has a Hamming weight greater than t, it cannot be decoded.

In the methods defined, when the agreed post-quantum cryptographic algorithms used are lattice-based public-key cryptosystem to protect the information, for example the biometric data, it could be based on Module Learning with Errors, M-LWE, like a Crystals-Kyber cryptosystem, or based on Module Learning With Rounding, M-LWR, like a Saber cryptosystem, so that the encryption, PQ.Encrypt, and decryption, PQ.Decrypt, algorithms correspond to the encryption and decryption algorithms of those cryptosystems.

Lattice problems or problems based on grids, such as LWE (Learning With Errors) are problems similar to those of decoding random binary linear codes.

In an LWE problem, given n binary values (samples) $x_i$ and binary vectors $g_i$ (of length k), with $x_i = g_i * a + e_i$, with $e_i$ a binary error with some probability tau of being 1, and *a* a binary vector of length k (guesses), for example, the NP problem consists of finding the $e_i$ (equivalently, succeeding in the guesses a). The n values of $e_i$ at the end are a binary vector of length n, as in code problems. And the n vectors $g_i$ (of length k) form a random n*k matrix, like the matrix G of the code problems.

There are two public key cryptosystems based on lattice problems: the Crystals-Kyber cryptosystem based on M-LWE, and the Saber cryptosystem, based on M-LWR. They are more efficient than the cryptosystems that use the LWE. The M-LWE and M-LWR problems can be seen as problems similar to the LWE but allowing for more efficient cryptosystems. Crystals-Kyber and Saber systematize and analyze all the steps that are carried out in a cryptosystem.

Both cryptosystems do not work with binary arithmetic (integer arithmetic modulo 2) but with integer arithmetic module q (q>2). This means that the addition/subtraction operator module q is used instead of the XOR operator.

The PQ.Encrypt encryption algorithm in Crystals-Kyber is:

---

**Algorithm Kyber.CPA.Enc**

---

*Inputs:* pk := (t,ρ)

      m ∈ $\mathcal{M}$

*Output:* c :=(u,v)

---

1. r ← $\{0,1\}^{256}$
2. t := ***Decompress***$(t, d_t)$
3. A ~ $R_q^{kxk}$ := ***Sam***(ρ)
4. (r ,e1, e2) ~ $\beta_\eta^k$ × $\beta_\eta^k$ × $\beta_\eta$ := ***Sam***(r)
5. u := ***Compress***$_q$ $(A_r^T + e_1, d_u)$
6. v := ***Compress***$_q$ $(t_r^T + e_2 + \lfloor\frac{q}{2}\rceil \cdot m, d_v)$

---

The encryption result, (u,v), results from using public keys (t, p) associated with arrays and adding errors (as in the PQ.Encode algorithm).

The encryption algorithm PQ.Encrypt in Saber is:

---

**Algorithm Saber.Enc**

---

*Inputs:* pk := (b, $seed_A$) $\in R_q^{lxl}$
m $\in \mathcal{M}$
r
*Output:* c := ( $c_m$,b')

---

1. A $\leftarrow$ $gen(seed_A) \in R_q^{lxl}$
2. s $\leftarrow$ $\beta_\mu(R_q^{lx1})$
3. $b' =$ **bits** $(A^T s' + h, \epsilon_q, \epsilon_p) \in R_p^{lx1}$
4. $v' = b^T$**bits** $(s', \epsilon_p, \epsilon_p) + h_1 \in R_p$
5. $c_m =$ **bits** $(v' + 2^{\epsilon_p - 1} m, \epsilon_p, \epsilon_{t+1}) \in R_{2t}$

---

The encryption result, (cm,b'), results from using public keys (b, seedA) associated with arrays and adding errors (as in the PQ.Encode algorithm).

The PQ.Decrypt decryption algorithm in Crystal-Kyber is:

---

**Algorithm Kyber.CPA.Dec**

---

*Inputs:* sk := s
$c = (u,v)$
*Output:* c := $Compress_q (v - s^T u, 1)$

---

1. $u = Compress_q (u, d_u)$
2. $v = Compress_q (v, d_v)$

---

The PQ.Decrypt decryption algorithm in Saber is:

---

**Algorithm Saber.Dec**

---

*Inputs:* sk := s
$c_m$
$b'$
*Output:* c := $(c_m, b')$

---

1. $v' = b'^T$**bits** $(s, \epsilon_p, \epsilon_p) + h_1 \in R_p$
2. $m' =$ **bits** $(v - 2^{\epsilon_p - \epsilon_t - 1} c_m + h_2, \epsilon_p, 1) \in R_p$

---

**DESCRIPTION OF THE DRAWINGS**

Figure 1 shows the steps of a biometric authentication method, according to the method for protecting information and the method for secure information matching, centered in the client, with post-quantum protected templates, based on the decoding problem for random binary linear codes or on the hardness of lattice problems.

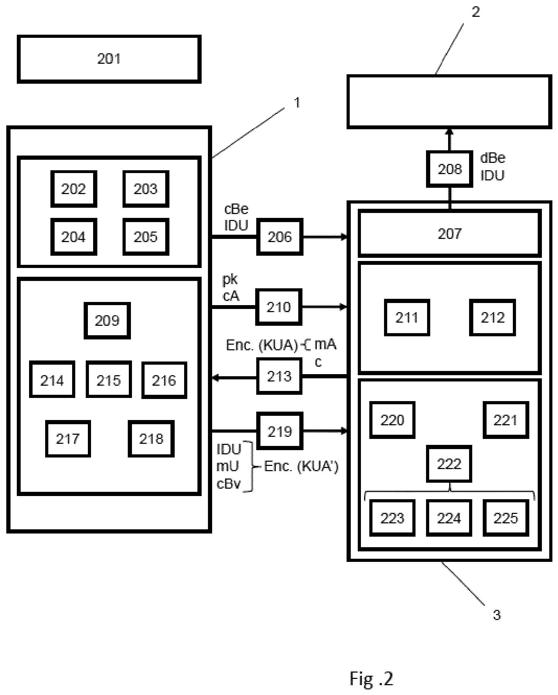

Figure 2 shows the steps of a biometric authentication method, according to the method for protecting information and the method for secure information matching, distributed between two parties with post-quantum protected templates based on the decoding problem for random binary linear codes.

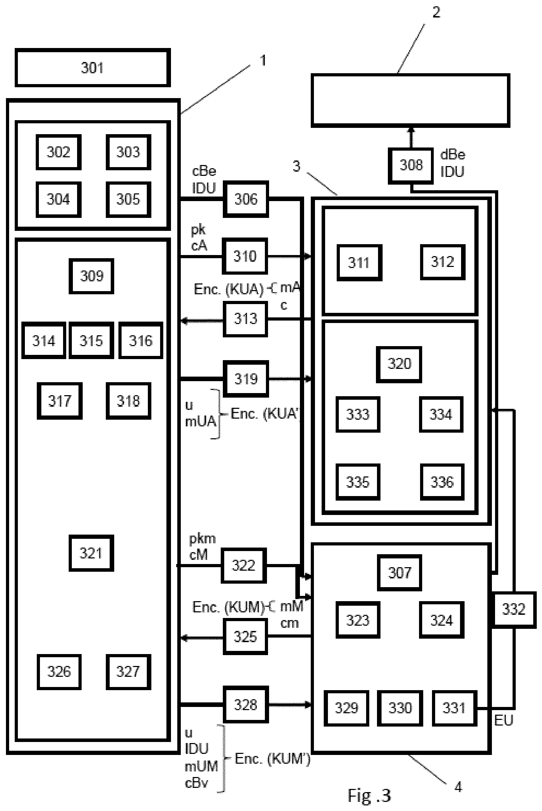

Figure 3 shows the steps of a privacy-preserving biometric authentication method, according to the method for protecting information and the method for secure information matching, distributed within three parties with post-quantum protected templates based on the decoding problem for random binary linear codes.

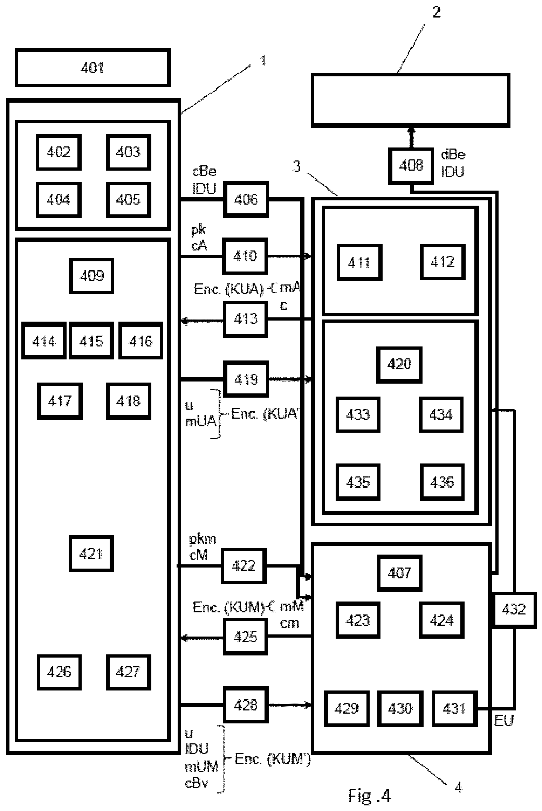

Figure 4 shows the steps of a privacy-preserving biometric authentication method, according to the method for protecting information and the method for secure information matching, distributed within three parties with post-quantum protected templates based on the hardness of lattice problems.

Figure 5 shows the total size of the protected information for 1, 1000, 10000 and 100000 entities of the Round 3 candidates of the post-quantum NIST competition for the present embodiment compared to other post-quantum schemes from the literature.

## PREFERRED EMBODIMENTS OF THE INVENTION

The invention relates to computer-implemented methods for protecting sensitive information extracted by the client and allowing secure electronic transactions carried out by the client.

Herein are provided embodiments combining the computer-implemented methods of the invention to protect and authenticate biometric information:

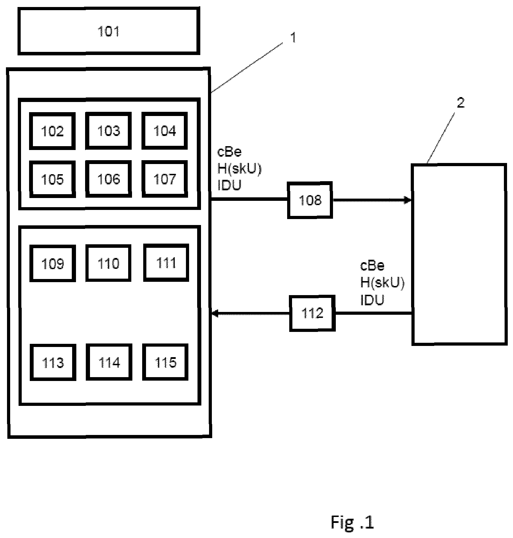

A first embodiment is related to a method for biometric authentication carried out by a first party, a client U, shown in figure 1.

The client is in charge of extracting the features of the person/thing, protecting them with a post-quantum cryptographic algorithm and deciding their authenticity.

The post-quantum protected biometric data could be stored by the client or using an external data base.

The post-quantum cryptographic algorithms could be based on the decoding problem for random binary linear codes or on the hardness of lattice problems (such as the Learning With Errors (LWE) problem).

The method comprises an initialization phase (101) performed once to fix the parameters of the algorithms employed, in particular, a binary $n \times k$ matrix G used, the maximum number of errors (t) capable of being corrected, the hash function (H) used, and the threshold (Th) of maximum dissimilarity allowed for successful authentication.

The matrix G could be a generator matrix of the binary code employed in the case of using a binary error correcting code or a matrix related to a Learning With Errors problem, in the case of using such problem.

Then, an enrollment phase is performed once to store the protected data required after by the verification phase. This phase is repeated only if the data need to be renewed or revoked.

The enrollment phase comprises the steps of protecting sensitive information:

1) generating (102) N secret and uniform random k-bit strings, skU(i), and, using a key-generation algorithm (KeyGen), selecting an adequate number of bits from them to generate a cryptographic key skU.

2) generating (103) N n-bit strings, xU(i), by using the binary matrix G, as xU(i)=G*skU(i).

3) extracting (104) the biometric features and representing them by a binary string, sUe, from the person/thing traits, and dividing the string into N substrings, sUe(i), with, respectively, z(i) bits, each one equal to or greater than t and equal to or smaller than n.

4) converting (105) the N substrings sUe(i) into N strings bUe(i) with n bits, by applying a secret padding that ensures the Hamming weights of bUe(i) are greater than t.

5) if other authentication factors are employed, other features, extracting (106) the required data, sUo, as a binary string, dividing it into N substrings, sUo(n), the substrings having n bits, and computing N strings as eUe(i)=bUe(i) XOR sUo(i); else computing the N strings as eUe(i)=bUe(i); ensuring that the Hamming weights of sUe(i) are greater than t.

6) binding (107) the authentication strings, eUe(i), with the cryptographic key by computing N strings as cBe(i)=xU(i) XOR eUe(i).

7) computing (108) the hashes of the N secrets, H(skU(i)), and storing these hashes, the N strings cBe(i), and an identifier IDU of the client U, as data that are required by the verification phase.

Then, the verification phase is performed every time there is the need of authenticating the person/thing registered at the enrollment phase. The verification phase comprising:

1) extracting (109) the biometric features, sUv, as a binary string, from the person/thing traits, and dividing the features into N substrings, sUv(i), with, respectively, z(i) bits, as done at enrollment phase.

2) converting (110) the N substrings sUv(i) into N strings bUv(i) with n bits, by applying a secret padding as done at enrollment phase.

3) if other authentication factors are employed, other features, extracting (111) the required data, sUo', as a binary string, dividing it into N substrings, sUo(i)', the substrings having n bits, and computing N strings as eUv(i)=bUv(i) XOR sUo(i)'; else computing the N strings as eUv(i)=bUv(i).

4) retrieving (112) the public data associated with the identifier IDU (the hashes, and the N strings cBe(i)), computing N strings cBe(i) XOR eUv(i), applying (113) a decoding algorithm of binary linear codes to the result to recover the data xU(i)', and, then, recovering the skU(i)', by using the matrix G.

5) if recovering all the strings xU(i)' is not possible or any of the hash functions of skU(i)' is different from the hash function of skU(i) retrieved, then concluding (115) an authentication failure; else, computing (114) the strings:

$$eUe(i)' \ = \ xU(i)' \ XOR \ cBe(i)$$

6) if a distance from the N strings, for example, the sum of the Hamming weights of the N strings eUe(i)' XOR eUv(i) is greater than the threshold Th, then concluding (115) authentication failure; else concluding authentication success. Then, recovering adequate bits from skU(n)' to regenerate the cryptographic key skU', which can be used then by the client U to carry out secure electronic transactions.

A second embodiment is related to a method for biometric authentication carried out by a first party, a client U, in charge of extracting the features of the person/thing and protecting them with a post-quantum cryptographic algorithm based on the decoding problem for random binary linear codes, and another or more parties: in this case, an authenticator A, in charge of deciding the authenticity of the person/thing using the client.

The post-quantum protected biometric data could be stored in the authenticator or in an external data base.

The method comprises an initialization phase (201) performed once to fix the parameters of the algorithms employed, in particular, of a code-based public-key cryptosystem employed. The parameters fixed are: a maximum number of errors (t) capable of being corrected, the hash function (H) used, the threshold (Th) of maximum dissimilarity allowed for successful authentication, the Key Encapsulation Mechanism (KEM) used to agree on a shared cryptographic key for establishing a secure communication channel between the client and the authenticator, the symmetric encryption scheme employed by the client and the authenticator, and the long-term private and public keys (skA, pkA) of the authenticator. For simplicity, the same pair (skA, pkA) is used for the KEM, although another pair could be used.

Then, an enrollment phase is performed once to store the protected data required after by the verification phase. This phase is repeated only if the data need to be renewed or revoked.

The enrollment phase comprises the steps of:

1) extracting (202) the features and representing them as a binary string, sUe, from the person/thing traits, and dividing the string into N substrings, sUe(i), with, respectively, z(i) bits, each one equal or greater than t and equal or smaller than n.

2) converting (203) the N substrings sUe(i) into N strings bUe(i) with n bits, by applying a secret padding that ensures the Hamming weights of bUe(i) are greater than t.

3) if other authentication factors are employed, other features, extracting (204) the required data, sUo, as a binary string, dividing it into N substrings, sUo(i), the substrings having n bits, and computing N strings as eUe(i)=bUe(i) XOR sUo(i); else computing the N strings as eUe(i)=bUe(i), ensuring that the Hamming weights of eUe(i) are greater than t.

4) computing (205) N strings cBe(i)=PQ.Encode(pkA, eUe(i)), by using the encoding algorithm, PQ.Encode, of the agreed code-based public-key cryptosystem, and the long-term public key, pkA, of the authenticator. Then, sending (206) the N strings cBe(i) and an identifier IDU of the client U to the authenticator, which stores (208) them. Preferably, the strings cBe(i) are stored encrypted (207) by a cryptographic key skUA, which only knows the authenticator, as dBe(i).

Then, the verification phase is performed every time there is the need of authenticating the person/thing registered at the enrollment phase. The verification phase comprising:

1) the client U generating (209) a pair of ephemeral public key (pk) and a private key (sk) by using the key-generation algorithm of the agreed KEM. Also, computing a ciphertext cA and a shared secret KA by using the encapsulation algorithm of the agreed KEM taking the long-term public key of the authenticator (pkA) as input. Then, sending (210) a request, the pk, and the cA to the authenticator.

2) the authenticator computing (211) a ciphertext c and a shared secret K by using the encapsulation algorithm of the agreed KEM, taking the received ephemeral public key of the client (pk) as input. Recovering KA' after applying the decapsulating algorithm to the received ciphertext cA, using its long-term private key (skA). Then, computing (212) the key KUA with the hash of K and KA'. Preferably, then choosing a binary nonce as a set of strings mA(i), and sending (213) mA(i), encrypted with the key KUA by using the agreed symmetric encryption scheme, and c to the client.

3) the client recovering (214) K' from decapsulating the received ciphertext c with its ephemeral private key (sk), computing the key KUA' with the hash of K' and KA, and decrypting mA(i) using the agreed symmetric encryption scheme. Preferably, then choosing another binary nonce as a set of strings mU(i).

4) the client extracting (215) the biometric features and representing them as a binary string (sUv), from the person/thing traits, then, dividing the string into N substrings, sUv(i), with z(i) bits each one, being z(i) equal or greater than t and equal or smaller than n, as done at the enrollment phase.

5) the client converting (216) the N substrings sUv(i) into N strings bUv(i), with length n, by applying the same secret padding as in the enrollment phase.

6) if other authentication factors are employed, other features, extracting (217) the required data, sUo', as a binary string, dividing it into N substrings, sUo(i)', the substrings having n bits, and computing N strings as eUv(i)=bUv(i) XOR sUo(i)'; else computing the N strings as eUv(i)=bUv(i).

7) the client computing (218) the N strings of the protected data as cBv(i)=PQ.Encode(pkA, eUv(i)) XOR mU(i) XOR mA(i), by using the encoding algorithm (PQ.Encode) of the agreed code-based public-key cryptosystem and the long-term public key (pkA) of the authenticator.

8) the client using the agreed symmetric encryption scheme to encrypt with KUA' the IDU, mU(i), and the N strings cBv(i), then, sending (219) the resulting ciphertext to the authenticator.

9) the authenticator using the agreed symmetric encryption scheme to decrypt (220) with KUA the IDU', mU(i)', and the N strings cBv(i)'. Also, retrieving (221) the N strings cBe(i) and computing (222), by using its long-term secret key (skA) and the decoding algorithm (PQ.Decode), N strings $EU(i) = cBv(i)'XOR cBe(i)$ and, then, computing (222) N strings dif_sU(i)=PQ.Decode(EU(i) XOR mU(i)' XOR mA(i)).

10) if decoding is not possible, the authenticator concludes (223) authentication failure and closes the communication with the client, else, the authenticator computes a distance from the N strings dif_sU(i), for example, the sum of the Hamming weights of the N strings dif_sU(i), and if the result is greater than the threshold Th, then concludes (224) authentication failure and closes the communication with the client; else concludes (225) authentication success and allows communication with the client U to carry out secure electronic transactions.

A third embodiment is related to a method for biometric authentication, preserving the privacy of the person/thing, carried out by a first party, a client U, in charge of extracting the features of the person/thing and protecting them with a post-quantum cryptographic algorithm based on the decoding problem for random binary linear codes, and two or more parties: in this case, a matcher M, in charge of computing an encrypted dissimilarity between the biometric features, extracted at verification and enrollment phases, provided by the client (the matcher not being able to know the biometric authenticity of the person/thing), and an authenticator A, in charge of deciding the biometric authenticity of the person/thing associated with the encrypted dissimilarity provided by the matcher (the authenticator not being able to know which client is evaluated).

The post-quantum protected biometric data could be stored in the matcher or in an external data base.

The method comprises an initialization phase (301) performed once to fix the parameters of the algorithms employed, in particular, of a code-based public-key cryptosystem employed. The parameters fixed are: a maximum number of errors (t) capable of being corrected, the hash function (H) used, the threshold (Th) of maximum dissimilarity allowed for successful authentication, the Key Encapsulation Mechanism (KEM), used to agree on a shared cryptographic key for establishing a secure communication channel between the client and the authenticator and between the client and the matcher, the symmetric encryption scheme employed by the client and the authenticator and by the client and the matcher (it is assumed that the communication between the authenticator and the matcher is secure), and the long-term private and public keys (skA, pkA) of the authenticator.and (skM, pkM) of the matcher. For simplicity, the same pair (skA, pkA) is used for the KEM, although another pair could be used.

Then, an enrollment phase is performed once to store the protected data required after by the verification phase. This phase is repeated only if the data need to be renewed or revoked.

The enrollment phase comprises the steps, carried out by the client U, of:

1) extracting (302) the features and representing them by a binary string, sUe, from the person/thing traits, and dividing the string into N substrings, sUe(i), with, respectively, z(i) bits, each one equal or greater than t and equal or smaller than n.

2) converting (303) the N substrings sUe(i) into N strings bUe(i) with n bits, by applying a secret padding that ensures the Hamming weights of bUe(i) are greater than t.

3) if other authentication factors are employed, other features, extracting (304) the required data, sUo, as a binary string, dividing it into N substrings, sUo(i), the substrings having n bits, and computing N strings as eUe(i)=bUe(i) XOR sUo(i); else computing the N strings as eUe(i)=bUe(i), ensuring that the Hamming weights of eUe(i) are greater than t.

4) computing (305) N strings cBe(i)=PQ.Encode(pkA, eUe(i)), by using the encoding algorithm, PQ.Encode, of the agreed code-based public-key cryptosystem, and the long-term public key, pkA, of the authenticator. Then, sending (306) the N strings cBe(i) and an identifier IDU of the client U to the matcher, which stores (308) them. Preferably, the strings cBe(i) are stored encrypted (307) by a cryptographic key skUM that only knows the matcher, as dBe(i).

Then, the verification phase is performed every time there is the need of authenticating the person/thing registered at the enrollment phase. The verification phase comprising:

1) the client U generating (309) a pair of ephemeral public key (pk) and a private key (sk) by using the key-generation algorithm of the agreed KEM. Also, computing a ciphertext cA and a shared secret KA by using the encapsulation algorithm of the agreed KEM taking the long-term public key of the authenticator (pkA) as input. Then, sending (310) a request, the pk, and the cA to the authenticator.

2) the authenticator computing (311) a ciphertext c and a shared secret K by using the encapsulation algorithm of the agreed KEM, taking the received ephemeral public key of the client (pk) as input. Recovering KA' after applying the decapsulating algorithm to the received ciphertext cA, using its long-term private key (skA). Then, computing (312) the shared key KUA with the hash of K and KA'. Preferably, then choosing a binary nonce as a set mA of strings mA(i), and sending (313) mA, encrypted by the agreed symmetric encryption scheme with the key KUA, and the ciphertext c to the client.

3) the client recovering (314) K' from decapsulating the received ciphertext c with its ephemeral private key (sk), computing the shared key KUA' with the hash of K' and KA, and decrypting mA to obtain the mA(i)' using the agreed symmetric encryption scheme. Preferably, then choosing another binary nonce as a set of strings mUA(i).

4) the client extracting (315) the features and representing them as a binary string, sUv, from the person/thing traits, then, dividing the string into N substrings, sUv(i), with z(i) bits each one, being z(i) equal or greater than t and equal or smaller than n,

5) the client converting (316) the N substrings sUv(i) into N strings bUv(i), with length n, by applying the same secret padding as in the enrollment phase.

6) if other authentication factors are employed, other features, extracting (317) the required data, sUo', as a binary string, dividing it into N substrings, sUo(i)', the substrings having n bits, and computing N strings as eUv(i)=bUv(i) XOR sUo(i)'; else computing the N strings as eUv(i)=bUv(i).

7) the client computing (318) the N strings of the protected data as cBv(i)=PQ.Encode(pkA, eUv(i)) XOR mUA(i) XOR mA(i)' by using the encoding algorithm (PQ.Encode) of the agreed code-based public-key cryptosystem and the long-term public key (pkA) of the authenticator.

8) the client using the agreed symmetric encryption scheme with the authenticator to encrypt with KUA' the strings mUA(i) and the privacy-preserving identifier u, then, sending (319) the resulting ciphertext to the authenticator.

9) the authenticator using the agreed symmetric encryption scheme with the client to decrypt (320) with KUA the strings mUA(i)' and the privacy-preserving identifier u' and requesting from matcher the information associated with u'.

10) the client U generating (321) a pair of ephemeral public key (pkm) and a private key (skm) by using the key-generation algorithm of the agreed KEM with the matcher. Also, computing a ciphertext cM and a shared secret KM by using the encapsulation algorithm of the agreed KEM taking the long-term public key of the matcher (pkM) as input. Then, sending (322) a request, the pkm, and the cM to the matcher.

11) the matcher computing (323) a ciphertext cm and a shared secret Km by using the encapsulation algorithm of the agreed KEM with the client, taking the received ephemeral public key of the client (pkm) as input. Recovering KM' after applying the decapsulating algorithm to the received ciphertext cM, using its long-term private key (skM). Then, computing (324) the shared key KUM with the hash of Km and KM'. Preferably, then choosing a binary nonce as a set mM of strings mM(i), and sending (325) mM, encrypted by the agreed symmetric encryption scheme with the client with the key KUM, and the ciphertext cm to the client.

12) the client recovering (326) Km' from decapsulating the received ciphertext cm with its ephemeral private key (skm), computing the shared key KUM' with the hash of Km' and KM, and decrypting mM' using the agreed symmetric encryption scheme. Preferably, then choosing another binary nonce as a set of strings mUM(i).

13) the client using the agreed symmetric encryption scheme with the matcher to encrypt (327), with KUM', the strings mUM(i), the IDU, the cBv(i), and the privacy-preserving identifier u. Then, sending (328) the resulting ciphertext to the matcher.

14) the matcher using the agreed symmetric encryption scheme with the client to decrypt (329) with KUM the strings mUM(i)', the IDU', the N strings cBv(i)', and the privacy-preserving identifier u'. Also, retrieving (330) the N strings cBe(i) by using IDU' and skUM, IDU is used for enhancing the efficiency of the process in order to identify easier the client and make faster the communication;

15) the matcher computing (331) the strings: EU(i) = (cBv(i)' XOR cBe(i)), and sending (332) EU(i) to the authenticator.

16) the authenticator using its long-term private key (skA) and the decoding algorithm (PQ.Decode), to obtain (333) N strings:

$$dif\_sU(i) \ = PQ.Decode(EU(i) \ XOR \ mUA(i)' \ XOR \ mA(i))$$

17) if decoding is not possible by the authenticator, the authenticator concludes (334) authentication failure and closes the communication with the client, else, the authenticator computes a distance from the N strings dif_sU(i), for example, the sum of the Hamming weights of the N strings dif_sU(i), and if the result is greater than the threshold Th, then concludes (335) authentication failure and closes the communication with the client; else concludes (336) authentication success and allows communication with the client U to carry out secure electronic transactions.

A fourth embodiment is related to a method for biometric authentication, preserving the privacy of the person/-thing, carried out by a first party, a client U, in charge of extracting the features of the person/thing and protecting them with a post-quantum cryptographic algorithm based on the hardness of lattice problems, and two or more parties: in this case, a matcher M, in charge of computing an encrypted dissimilarity between the features, extracted at verification and enrollment phases, provided by the client (the matcher not being able to know the authenticity of the person/thing), and an authenticator A, in charge of deciding the authenticity of the person/thing associated with the encrypted dissimilarity provided by the matcher (the authenticator not being able to know which client is evaluated).

The post-quantum protected biometric data could be stored in the matcher or in an external data base.

The method comprises an initialization phase (401) performed once to fix the parameters of the algorithms employed, in particular, of a lattice-based public-key cryptosystem employed, able to manage messages of n bits. The parameters fixed are: the hash function (H) used, the threshold (Th) of maximum dissimilarity allowed for successful authentication, the Key Encapsulation Mechanism (KEM) used to agree on a shared cryptographic key for establishing a secure communication channel between the client and the authenticator and between the client and the matcher, the symmetric encryption scheme employed by the client and the authenticator and by the client and the matcher (it is assumed that the communication between the authenticator and the matcher is secure), and the long-term private and public keys (skA, pkA) of the authenticator.and (skM, pkM) of the matcher. For simplicity, the same pair (skA, pkA) is used for the KEM, although another pair could be used.

Then, an enrollment phase is performed once to store the protected data required after by the verification phase. This phase is repeated only if the data need to be renewed or revoked.

The enrollment phase comprises the steps, carried out by the client U, of:

1) extracting (402) the features and representing them as a binary string, sUe, from the person/thing traits, and dividing the string into N substrings, sUe(i), with, respectively, z(i) bits, each one equal or smaller than n.

2) converting (403) the N substrings sUe(i) into N strings bUe(i) of length n, by applying a secret padding.

3) if other authentication factors are employed, other features, extracting (404) the required data, sUo, as a binary string, dividing it into N substrings, sUo(i), the substrings having n bits, and computing N strings as eUe(i)=bUe(i) XOR sUo(i); else computing the N strings as eUe(i)=bUe(i).

4) computing (405) N strings cBe(i)=(cBe(i).u, cBe(i).v)=PQ.Encrypt(pkA, eUe(i)), by using the encryption algorithm, PQ.Encrypt, of the agreed lattice-based public-key cryptosystem, and the long-term public key, pkA, of the authenticator. Then, sending (406) the N strings cBe(i) and an identifier IDU of the client U to the matcher, which stores (408) them. Preferably, the strings cBe(i) are stored encrypted (407) by a cryptographic key skUM that only knows the matcher, as dBe(i).

Then, the verification phase is performed every time there is the need of authenticating the person/thing registered at the enrollment phase. The verification phase comprising:

1) the client U generating (409) a pair of ephemeral public key (pk) and a private key (sk) by using the key-generation algorithm of the agreed KEM with the authenticator. Also, computing a ciphertext cA and a shared secret KA by using the encapsulation algorithm of the agreed KEM taking the long-term public key of the authenticator (pkA) as input. Then, sending (410) a request, the pk, and the cA to the authenticator.

2) the authenticator computing (411) a ciphertext c and a shared secret K by using the encapsulation algorithm of the agreed KEM with the client, taking the received ephemeral public key of the client (pk) as input. Recovering KA' after applying the decapsulating algorithm to the received ciphertext cA, using its long-term private key (skA). Then, computing (412) the shared key KUA with the hash of K and KA'. Preferably, then choosing a binary nonce as uniform random strings mA(i), and sending (413) mA(i), encrypted by the agreed symmetric encryption scheme with the client with the key KUA, and the ciphertext c to the client.

3) the client recovering (414) K' from decapsulating the received ciphertext c with its ephemeral private key (sk), computing the shared key KUA' with the hash of K' and KA, and obtaining mA(i)' using the agreed symmetric encryption scheme. Preferably, then choosing another binary nonce as a set of strings mUA(i).

4) the client extracting (415) the features and representing them by a binary string, sUv, from the person/thing traits, then, dividing the features into N substrings, sUv(i), with z(i) bits each one, being z(i) equal or smaller than n.

5) the client converting (416) the N substrings sUv(i) into N strings bUv(i), with length n, by applying the same secret padding as in the enrollment phase.

6) if other authentication factors are employed, other features, extracting (417) the required data, sUo', as a binary string, dividing it into N substrings, sUo(n)', the substrings having n bits, and computing N strings as eUv(i)=bUv(i) XOR sUo(i)' XOR mUA(i) XOR mA(i)'; else computing the N strings as eUv(i)=bUv(i) XOR mUA(i) XOR mA(i)'.

7) the client computing (418) the N strings of the protected data as cBv(i)=(cBv(i).u, cBv(i).v)=PQ.Encrypt(pkA, eUv(i)) by using the encryption algorithm (PQ. Encrypt) of the agreed lattice-based public-key cryptosystem and the long-term public key (pkA) of the authenticator.

8) the client using the agreed symmetric encryption scheme with the authenticator to encrypt with KUA' the strings mUA(i) and the privacy-preserving identifier u, then, sending (419) the resulting ciphertext to the authenticator.

9) the authenticator using the agreed symmetric encryption scheme with the client to decrypt (420) with KUA the strings mUA(i)' and the privacy-preserving identifier u' and requesting from the matcher the information associated with u'.

10) the client U generating (421) a pair of ephemeral public key (pkm) and a private key (skm) by using the key-generation algorithm of the agreed KEM with the matcher. Also, computing a ciphertext cM and a shared secret KM by using the encapsulation algorithm of the agreed KEM taking the long-term public key of the matcher (pkM) as input. Then, sending (422) a request, the pkm, and the cM to the matcher.

11) the matcher computing (423) a ciphertext cm and a shared secret Km by using the encapsulation algorithm of the agreed KEM with the client, taking the received ephemeral public key of the client (pkm) as input. Recovering KM' after applying the decapsulating algorithm to the received ciphertext cM, using its long-term private key (skM). Then, computing (424) the shared key KUM with the hash of Km and KM'.

Preferably, then choosing a binary nonce as a set of strings mM(i), and sending (425) cm, and mM(i), encrypted by the agreed symmetric encryption scheme with the client with the key KUM, to the client.

12) the client recovering (426) Km' from decapsulating the received ciphertext cm with its ephemeral private key (skm), computing the shared key KUM' with the hash of Km' and KM, and decrypting mM(i)' using the agreed symmetric encryption scheme. Preferably, then choosing another binary nonce as a set of strings mUM(i).

13) the client using the agreed symmetric encryption scheme with the matcher to encrypt (427), with KUM', IDU', cBv(i), and the privacy-preserving identifier u. Then, sending (428) the resulting ciphertext to the matcher.

14) the matcher using the agreed symmetric encryption scheme with the client to decrypt (429) with KUM the IDU', the N strings cBv(i)', and the privacy-preserving identifier u'. Also, retrieving (430) the N strings cBe(i) by using IDU' and skUM;

15) the matcher computing (431) the strings: EU(i) = cBv(i)' - cBe(i), and sending (432) EU(i) to the authenticator.

16) the authenticator using its long-term secret key (skA) and the decryption algorithm (PQ. Decrypt), to obtain (433) N strings:

$$dif\_sU(i) = PQ.Decrypt(skA, EU(i)) \; XOR \; mUA(i)' \; XOR \; mA(i)$$

17) the authenticator computes a distance from the N strings dif_sU(i), for example, the sum of the Hamming weights of the N strings dif_sU(i), and if the result is greater than the threshold Th, then concludes (435) authentication failure and closes the communication with the client; else concludes (436) authentication success and allows communication with the client U to carry out secure electronic transactions.

In the third embodiment, the code-based public-key cryptosystem employed to protect the biometric data could be a McEliece, or a Niederreiter system, like a Classic McEliece (based on binary Goppa codes) cryptosystem or a BIKE system (based on quasi-cyclic moderate-density parity-check, QC-MDPC codes), so that the encoding,
[0110] PQ.Encode, and decoding, PQ.Decode, algorithms correspond to the encoding and decoding algorithms of those cryptosystems.
In the fourth embodiment, the lattice-based public-key cryptosystem employed to protect the biometric data could be based on Module Learning with Errors, M-LWE, like a Crystals-Kyber cryptosystem, or based on Module Learning With Rounding, M-LWR, like a Saber cryptosystem, so that the encryption, PQ.Encrypt, and decryption, PQ.Decrypt, algorithms correspond to the encryption and decryption algorithms of those cryptosystems.
In the method of the invention, there can be several clients, configured to perform the steps of protecting information at an enrollment phase, and one of them configured to identify the information extracted at the verification phase. There can be a data base, which can be a distributed ledger, that stores the protected information generated by the clients at the enrollment phase. In this case, the authenticator is substituted by an identifier, configured to perform all the steps of an authenticator but instead of authenticating the information, selecting the information extracted at enrollment phase by one of the clients whose Hamming distance with the information extracted at verification phase is the minimum. Finally, there can be a matcher, configured to perform the steps of matching the information extracted at verification and enrollment phases.
The present invention allows to protect the sensitive information without reducing the recognition accuracy of protected biometric systems compared to the unprotected systems, as happens to using fuzzy extractors.

If the unprotected biometric systems work with binary features (such as several systems using fingerprints, iris, palm prints, vein patterns, etc.) the present solutions offer protection while maintaining the recognition accuracy. Nevertheless, if the unprotected biometric system works with non-binary features, they should be binarized by preserving distances.

Several schemes known, in the art, allow feature binarization with high performance. Nevertheless, it has been found that schemes using Linearly Separable Subcodes (LSSC) and Partially Linearly Separable Subcodes (PLSSC) achieve, respectively, perfect and near ideal separability level. Working with binary data is much more efficient in terms of processing speed and power consumption than working with floating points or integers.

In an example, using face recognition systems, the client was executed on the smartphone of the registered user. The smartphone uses the front camera to capture user faces. Then, a convolutional neural network to detect and crop faces in the input image, was applied. Subsequently, another convolutional neural network to extract floating-point embeddings, was employed as extractor of features.

A library which supports the pre-trained models, was used to develop the biometric recognition client in the smartphone. The 128 floating-point feature elements obtained from face images were discretized into the codes 000, 001, 011 and 111 by using the Linearly Separable Subcode (LSSC). The resulting biometric strings are composed of 384 bits (48 bytes).

In order to demonstrate the efficiency of the embodiment, two public databases were selected: FERET and LFW. Both databases exhibit variations in pose, expression, sex, age and illumination. FERET database is a standard database distributed by NIST. It is composed of 7,810 samples from 725 individuals acquired over three years in 15 different sessions. Since the acquisition conditions in FERET database were semi-controlled (the same physical setup was employed but it was reassembled for each session), LFW database was considered. LFW database was designed for unconstrained face recognition by using images collected from the web. The only constraint is that the Viola-Jones detector could detect the faces. In total, the LFW database includes 13,233 samples from 5,749 individuals.

For the evaluation of the recognition accuracy, we followed the FVC (Fingerprint Verification Competition) protocol. For the genuine comparison, each sample of the same individual is compared to the remaining samples of the same individual. For the impostor comparisons, the first sample of each individual is compared with the first sample of the remaining individuals. Symmetric comparisons are removed to avoid correlation.

In the FERET database, the number of genuine comparisons was 34,875 and the number of impostor comparisons was 16,6176. In the LFW database, the number of genuine comparisons was 22,254 and the number of impostor comparisons was 23,5148, respectively. It is noted that not all individuals in the FERET and LFW databases have the same number of samples. The floating-point embeddings were compared using the Euclidean distance. With the present invention, the binary embeddings were compared using the Hamming distance.

Table1.

| Database | FERET | | LFW | |
|---|---|---|---|---|
| Representation | Float | Binary | Float | Binary |
| Accuracy (%) | 99.2 | 98.9 | 99.5 | 99.4 |
| EER (%) | 1.1 | 1.7 | 0.5 | 0.8 |
| AUC (%) | 99.9 | 99.8 | 99.9 | 99.9 |

Table 1 shows the recognition accuracy of FaceNet embeddings represented in floating-point (unprotected) and binary (protected). The recognition accuracy was evaluated in terms of accuracy (defined as the ratio in percent between the number of true recognition decisions and the total number of recognition decisions), EER (Equal Error Rate, which is the rate value where false acceptance rate and false rejection rate coincide) and AUC (Area Under Curve of ROC (Receiver Operating Characteristic) curve which compares the false acceptance rate and the true acceptance rate). Although some information is lost through binarization, the recognition accuracy offered by the present invention is not largely affected. The threshold Th of dissimilarity was set to 67, which means a maximum Hamming distance of 67.

The performance evaluation considered biometric protection schemes based on the Classic McEliece parameter sets which provide security levels of 128 and 256 bits (protected templates based on the decoding problem for binary linear Goppa codes). These parameters sets are McEliece348864 (with n=3488, t=64, m=12, and k=2720) and Mceliece6688128 (with n=6688, t=128, m=13, and k=5024), respectively. It can be seen how the maximum number of errors (64 and 128) is different from the biometric threshold (67). A fuzzy extractor using t=64 (offering a security of 128 bits) could be somewhat practical, but increasing the false rejection of genuine users. A fuzzy extractor using t=128 (offering a security of 256 bits) is not practical since it increases largely the false acceptance of impostor users.

Using McEliece348864, the biometric features, sUe and sUv, of 384 bits (48 bytes) were divided into 2 substrings, (sUe1, sUe2) and (sUv1, sUv2) with length z=192. The size of the protected template (cBe1, cBe2) is 2*96=192 bytes, which means the ratio of protected/unprotected data is 192/48= 4.

If the number of 1's and 0's in the 384-bit strings were similar, the substrings would have around 96 1's. In any case, the strings (bUe1, bUe2) and (bUv1, bUv2), with length n=3488, and a random padding (fixed at enrollment, when the client is installed in the user smartphone) of n-z=3296 (around 1648 1's) have around 96+1648=1744 1's, which is greater than the t=64 errors able to be corrected by the Goppa code of McEliece348864. Therefore, only using biometric data, eUe=bUe, the public data (xUe1, xUe2) cannot be decoded even by the client, in the first of the presented solutions, centered on the client.

In the case of the distributed architecture with 2 or 3 parties, the data (cBe1, cBe2) cannot be decoded even by the authenticator, in possession of the secret key.

In the case of a genuine person using the client in his/her smartphone, the Hamming weights of (eUe1 XOR eUv1) and (eUe2 XOR eUv2) are below 34 (67 is the threshold).

Hence, in the solution centered on the client, the client can decode (xUe1 XOR eUv1, xUe2 XOR eUv2), and verify if its sum is below Th to regenerate its private key. In the case of the distributed architecture with 2 or 3 parties, the authenticator can decode (cBv1' XOR cBe1 XOR mU1' XOR mA1 XOR mUA1) and (cBv2' XOR cBe2 XOR mU2' XOR mA2 XOR mUA2) with its private key and verify if their sum is below Th to go on communication with the client.

In the case of an impostor person trying to impersonate the genuine person, using his/her genuine smartphone, the Hamming weights of (eUe1 XOR eUv1) and (eUe2 XOR eUv2) are around 96 (192/2). The client cannot decode (xUe1 XOR eUv1, xUe2 XOR eUv2) because only t=64 errors can be corrected. An impostor with dissimilarity of 68 can make the client decode but their sum will be greater than Th so that the private key will not be regenerated. Similarly, in the distributed solution, even if the authenticator is able to decode the dif_sU1 and dif_sU2, if their sum is greater than Th, the authentication fails.

Using McEliece6688128, the biometric features, sUe and sUv, of 384 bits (48 bytes) were not divided. The size of the protected template cBe1 is 208 bytes, which means that the ratio of protected/unprotected data is 208/48= 4.3.

If the number of 1's and 0's in the 384-bit strings were similar, they would have around 192 1's. In any case, the strings bUe1 and bUv1, with length n=6688, and a random padding (fixed at enrollment, when the client is installed in the user smartphone) of n-z=6304 (around 3152 1's) have around 192+3152=3344 1's, which is greater than the t=128 errors able to be corrected by the Goppa code of the McEliece6688128. Therefore, only using biometric data, eUe=bUe, the public data xUe1 cannot be decoded even by the client, in the first of the presented solutions, centered on the client.

In the case of the distributed architecture with 2 or 3 parties, the data cBe1 cannot be decoded even by the authenticator, in possession of the secret key.

In the case of a genuine person using the client in his/her smartphone, the Hamming weights of (eUe1 XOR eUv1) are below 67 (67 is the threshold). Hence, in the solution centered on the client, the client can decode (xUe1 XOR eUv1), and verify if their sum is below Th to regenerate its private key. In the case of the distributed architecture with 2 or 3 parties, the authenticator can decode (cBv1' XOR cBe1 XOR mU1' XOR mA1 XOR mUA1) with its private key and verify if their sum is below Th to go on communication with the client.

In the case of an impostor person trying to impersonate the genuine person, using his/her genuine smartphone, the Hamming weights of (eUe1 XOR eUv1) are around 192 (384/2). The client cannot decode (xUe1 XOR eUv1) because only t=128 errors can be corrected. An impostor with dissimilarity of 68 can make the client decode, but the Hamming weight will be greater than Th so that the private key will not be regenerated. Similarly, in the distributed solution, even if the authenticator is able to decode the dif_sU1 if the Hamming weight is greater than Th, the authentication fails.

Table 2.

| Proposal | Security Level (bits) | Unprotected Feature Size (bytes) | Protected Feature Size (bytes | Protected/ Unprotected | Public Key (bytes) | Private Key (bytes) | Keys Size |
|---|---|---|---|---|---|---|---|
| NTRU [Kolberg] | 128 | 48 | 5,632 | 117.3 | - | - | 6,144 |
| Ideal Lattices [Yasuda] | 80 | 256 | 19,456 | 76.0 | - | - | 79,677.2 |
| R-LWE [Yasuda] | 80 | 256 | 31,744 | 124.0 | 31,744 | 16,384 | 48,128 |
| Kyber512-based | 128 | 48 | 1,536 | 32.0 | 800 | 768 | 1,568 |
| Kyber1024-based | 256 | 48 | 3,136 | 65.3 | 1,568 | 1,536 | 3,104 |

(continued)

| Proposal | Security Level (bits) | Unprotected Feature Size (bytes) | Protected Feature Size (bytes | Protected/ Unprotected | Public Key (bytes) | Private Key (bytes) | Keys Size |
|---|---|---|---|---|---|---|---|
| Light Saber-based | 128 | 48 | 1,472 | 30.7 | 672 | 832 | 1,504 |
| Fire Saber-based | 256 | 48 | 2,944 | 61.3 | 1,312 | 1,664 | 2,976 |
| Mceliece348864-based | 128 | 48 | 192 | 4.0 | 261,120 | 6,492 | 267,612 |
| Mceliece6688128-based | 256 | 48 | 208 | 4.3 | 1,044,992 | 13,932 | 1,058,924 |

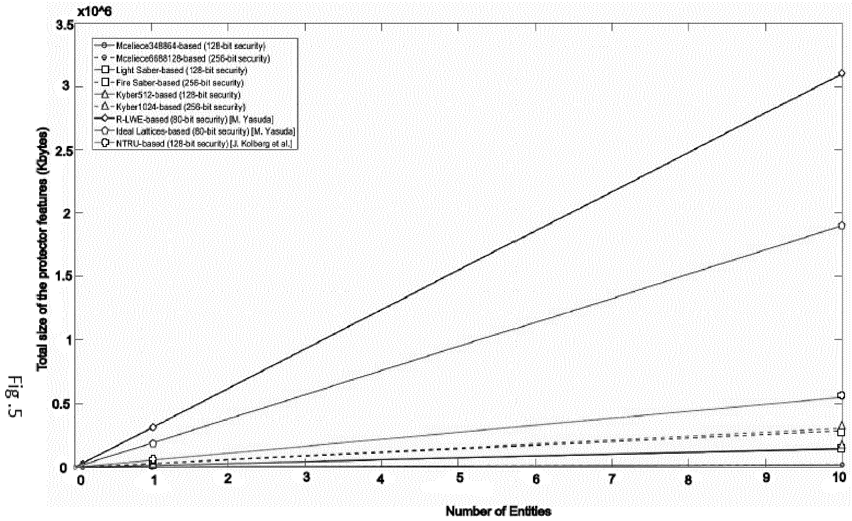

Table 2 shows the size performance of the Round 3 candidates of the post-quantum NIST competition for the present embodiment compared to other post-quantum biometric protection schemes from the literature based on the combination of homomorphic encryption and lattice-based cryptography. The embodiments based on Mceliece348864 and Mceliece6688128 are the best ones by considering the ratio of Protected Feature Size and Unprotected Feature Size. The embodiments based on Kyber and Saber are the best ones considering the size of the keys. Concerning the communication and storage of protected features in the distributed architectures, Classic McEliece, Kyber and Saber offer smaller sizes. This is illustrated in Figure 5 for 1, 1000, 10000 and 100000 entities.

Regarding execution times in the smartphone, on this particular example, the extraction of the floating-point embeddings, binarization, string composition and PQ.Encode algorithm was, approximately, 25.3 ms for Mceliece348864 and 55.7 ms for Mceliece6688128. The time required for the XOR operation, PQ.Decode algorithm, and the generation of the recognition decision was, approximately, 142.6 ms for Mceliece348864 and 259.0 ms for Mceliece6688128. These results proved that the verification of a user can be carried out in real time. The total verification time is, approximately, 167.9 ms for Mceliece348864 and 314.7 ms for Mceliece6688128. Figure 5 shows the total size of the protected features for 1, 1000, 10000 and 100000 entities of the Round 3 candidates of the post-quantum NIST competition for the present embodiment compared to other post-quantum schemes from the literature, the same as in Table 2.

**Claims**

1. A computer-implemented method for protecting sensitive information, using agreed post-quantum cryptographic algorithms based on the decoding problem for random binary linear codes or on the hardness of lattice problems comprising:

   - generating (103) a set of N private strings xU(i), i being a number between 1 and N, or a (201, 301, 401) pair of private and public keys (skA, pkA):

     ◦ in case of generating (103) the N private strings xU(i), using a set of N uniform random k-bit strings, skU(i), previously generated (102), and converting them to private strings xU(i), by using a binary $n * k$ matrix G, which is a generator matrix of a code of dimension n and rank k, when using post-quantum cryptographic algorithms based on the decoding problem for random binary linear codes or a matrix related to a Learning With Errors problem, with n samples and k guesses, when using post-quantum cryptographic algorithms based on the hardness of lattice problems; or
     ◦ in case of generating (201, 301, 401) private and public keys (skA, pkA), using a key-generation algorithm of the agreed binary-linear-codes-based post-quantum cryptographic algorithms or of the agreed lattice-based post-quantum cryptographic algorithms;

   - obtaining (104, 202, 302, 402, 215, 315, 415) a set of features to represent the sensitive information and in turn representing the features by binary data, which preserve the distances between the features, thus, creating a binary string sUe:

   wherein the method is **characterised by**:

- dividing the binary string sUe into N substrings sUe(i) with z(i) bits each one, being z(i) equal or smaller than *n* and, in case of using a binary linear code or Learning With Errors problem, being z(i) equal or greater than a previously fixed maximum number of errors (t); and i being a number between 1 and N;
- calculating (105, 203, 303, 403, 216, 316, 416) strings bUe(i), with n bits, by applying a secret padding to the substrings sUe(i);
- transforming (107, 205, 305, 405, 218, 318, 418) strings eUe(i) into strings cBe(i) by

◦ calculating (107):

$$cBe(i) = xU(i) \, XOR \, eUe(i)$$

in case of having generated the private strings xU(i); or
◦ calculating (205, 305, 405, 218, 318, 418):

$$cBe(i) = \mathrm{PQ.\,Encode/PQ.\,Encrypt}\,(pkA, eUe(i))$$

in case of having generated (skA, pkA) and wherein PQ.Encode/PQ.Encrypt is an encoding or encryption algorithm of the agreed post-quantum cryptographic algorithms, which are:

▪ a code-based public-key cryptosystem selected from: a McEliece, or a Niederreiter system; or
▪ a lattice-based public-key cryptosystem selected from systems based on Module Learning with Errors, M-LWE, or based on Module Learning With Rounding, M-LWR; and

wherein the strings eUe(i) are equal to bUe(i) if no additional data are incorporated and it is ensured that the Hamming weight of each eUe(i) is greater than t, except for the case wherein the algorithm PQ.Encrypt is used.

2. A computer-implemented method according to claim 1, wherein the sensitive information is represented by features that can include some noise, the features preferably obtained from measurements of persons' and things' traits that are univocally associated with their physical entities, such as persons' biometric traits.

3. A computer-implemented method according to any of the previous claims, further comprising the steps of:

- obtaining (106, 204, 304, 404, 217, 317, 417) additional binary data, which preserve the distances between them, thus, creating binary string sUo,
- dividing the binary string sUo into N substrings sUo(i) with n bits each one; and wherein the strings eUe(i) are calculated by:

$$eUe(i) = bUe(i) \, XOR \, sUo(i)$$

ensuring that the Hamming weight of each string eUe(i) is greater than t, except for the case wherein the algorithm PQ.Encrypt is used.

4. A computer-implemented method according to any of the previous claims, wherein the binary data associated with sensitive information and/or the additional binary data represent non-binary features that are binarized preserving the distances between them, thus, creating the binary strings sUe and/or sUo.

5. A computer-implemented method for matching protected information, performed by one party (1) configured to obtain and protect sensitive information and to match said obtained and protected sensitive information with strings cBe(i) previously stored at an enrollment phase, being obtained (107) as cBe(i) = xU(i) XOR eUe(i) by using the method according to any of the claims 1 to 4, and the strings cBe(i) representing protected sensitive information as protected template to which compare the sensitive information to be matched and wherein a threshold value of dissimilarity Th is previously agreed, the method comprising:

- obtaining (109) binary data, which preserve the distances between them, associated with sensitive information, thus, creating a binary string sUv,
- dividing the binary string into N substrings sUv(i) with z(i) bits each one, being z(i) equal or smaller than n and, in case of using a binary linear code or Learning With Errors problem, being z(i) equal or greater than t, and i being a number between 1 and N;
- computing (110) strings bUv(i), with n bits, by applying a secret padding, equal to the one used in the enrollment phase, to the substrings sUv(i);
- retrieving (112) the strings cBe(i) previously stored;
- calculating:

$$cBe(i)\ XOR\ eUv(i)$$

wherein eUv(i)=bUv(i) if no additional data are incorporated;
- applying (113) a decoding algorithm of binary linear codes to the result of the calculation, thus, obtaining xU(i)';
- calculating (114):

$$eUe(i)' = xU(i)'XOR\ cBe(i)$$

$$dif\_sU(i)' = eUe(i)'XOR\ eUv(i)$$

- computing a distance D from the dif_sU(i)', preferably, a Hamming distance:

$$HD = \sum_{i=1}^{N} Hamming\ Weight(dif\_sU(i)')$$

- matching the sensitive information, such that if D is greater than Th, then concluding (115) matching failure, else concluding (115) matching success.

6. A method according to claim 5, wherein several agreed threshold values of dissimilarity Th(j) are agreed and several distances D(j), preferably Hamming distances are computed as:

$$HD(j) = \sum_{i=j}^{j+m} Hamming\ Weight(dif\_sU(i)')$$

wherein j is a number equal or greater than 1 and j+m is a number equal or smaller than N, matching the sensitive information, such that if values obtained from the distances D(j) are equal or smaller than the thresholds Th(j), then matching success is concluded (115) and else, matching failure is concluded (115).

7. A method according to any of claims 5 to 6, wherein a hash function H is previously agreed and strings H(skU(i)) are previously stored (108) at an enrollment phase, and wherein the step of matching also includes:

- applying a decoding algorithm of binary linear codes to xU(i)' to obtain skU(i)',
- determining if the step of obtaining xU(i)' and skU(i)' does not allow to recover all the components, then concluding matching failure; and
- applying the agreed hash function to the calculated skU(i)' and retrieving the strings H(skU(i)),
- if H(skU(i)') = H(skU(i)) for all i, then concluding (115) matching success, else concluding (115) matching failure.

8. A method according to claim 7, which further allows the party (1), configured to match the information, to carry out secure electronic transactions, wherein at an enrollment phase a key-generation algorithm using bits from the set of strings skU(i) is agreed to generate a cryptographic key, further comprising the step of:

- if matching is successful, selecting the bits from the set of calculated strings skU(i)', reconstructing the cryptographic key by using the agreed key-generation algorithm, and using the cryptographic key to carry out secure electronic transactions.

9. A computer-implemented method for matching protected information, performed by at least two parties, a client (1) configured to obtain and protect sensitive information, an authentication party (3) configured, at a verification phase, to match the sensitive information with the sensitive information in the form of strings cBe(i), previously stored (208, 308, 408) as template, at an enrollment phase, being obtained by using the method according to any of the claims 1 to 4, and, preferably, one or more auxiliary parties (4), comprising the steps of:

- establishing secure communication channels between the client (1) and each of the authentication party (3) and/or the auxiliary parties (4) by using an agreed (201, 301, 401) Key Encapsulation Mechanism (KEM), considering that the authentication party (3) and/or the auxiliary parties (4) have a pair of long-term private and public keys generated by employing a key-generation algorithm of the KEM and that share information in a secure way between them, wherein one of the authentication party (3) or the auxiliary parties (4) performs the stages of:

  ○ computing (211, 311, 411, 323, 423) a ciphertext c and a shared secret K by using an encapsulation algorithm of an agreed Key Encapsulation Mechanism (KEM) and using an ephemeral public key pk received from the client and generated (209, 309, 409, 321, 421) by the client by employing a key-generation algorithm of the KEM;
  ○ calculating another shared secret KA' by using its long-term private key and applying a decapsulating algorithm to a ciphertext cA that was calculated, as well as KA, by using its long-term public key and applying the encapsulation algorithm, being cA received from the client and calculated by the client, which also calculated KA;
  ○ calculating (212, 312, 412, 324, 424) a shared key KUA by applying a hash function previously agreed to the shared secrets K and KA';
  ○ sending (213, 313, 413, 325, 425) ciphertext c to the client;

- one of the authentication party (3) or the auxiliary parties (4) using an agreed symmetric encryption scheme with the client to decrypt (220, 329, 429), with the KUA shared with the client, N strings cBv(i)', received from the client and calculated (218, 318, 418) by the client by applying the steps of the method of the claims 1 to 4 to protect sensitive information to be matched in a verification phase, using post-quantum cryptographic algorithms and using the long-term public key of the authentication party (3), and the cBv(i) are encrypted by the client, using the agreed symmetric encryption scheme, with KUA', which is coincident with KUA, wherein KUA' is obtained (214, 314, 414, 326, 426) by the client by applying a hash function previously agreed to KA and to K', wherein K' is obtained (214, 314, 414, 326, 426) by the client by decapsulating the received ciphertext c using the ephemeral private key sk, associated with pk, wherein sk and pk are generated (209, 309, 409, 321, 421) by the client by employing a key-generation algorithm of the KEM;
- one of the authentication party (3) or the auxiliary parties (4) obtaining (221, 330, 430) N strings cBe(i), previously stored at an enrollment phase representing protected sensitive information as protected template,
- one of the authentication party (3) or the auxiliary parties (4) calculating (222, 331, 431) the variables EU(i) as:

$$EU(i) = cBv(i)'\,XOR\,cBe(i)$$

if a code-based cryptosystem is employed; or:

$$EU(i) = cBv(i)' - cBe(i)$$

if a lattice-based cryptosystem is employed that uses integer arithmetic module q, with q>2;
- the authentication party (3) computing (222, 333, 433), by using its long-term private key skA and the decoding algorithm PQ.Decode or the decryption algorithm PQ.Decrypt, N strings dif_sU(i):

$$dif\_sU(i) = PQ.Decode/PQ.Decrypt\,(skA, EU(i)\,).$$

10. A method according to claim 9, wherein the auxiliary parties (4) comprise a matcher (4), such that the step of establishing secure communication channels is performed between the client (1) and the authentication party (3) and between the client (1) and the matcher (4), assuming that the communication between the matcher (4) and the authentication party (3) is secure, and wherein the steps of obtaining (329, 429) N strings cBv(i)', obtaining (330, 430) N strings cBe(i), and calculating (331, 431) the variables EU(i) are performed by the matcher (4), which sends the information to the authentication party (3) to perform the steps of computing (333, 433) N strings dif_sU(i).

**11.** A method according to any of claims 9 to 10, wherein the authentication party (3) is an authenticator or an identifier:

in the case of being an authenticator, matching by:

  ◦ if decoding the N strings dif_sU($i$) is not possible, concluding (223, 334, 434) matching failure; and
  ◦ computing a Hamming distance as the sum of the Hamming weights of the N strings dif_sU(i), if the result is greater than the threshold Th, then concluding (224, 335, 435) matching failure, and else concluding matching (225, 336, 436) success;

  - in the case of being an identifier, wherein multiple strings cBe(i) are previously obtained (205, 305, 405) as template at the enrolment phase, the method further comprising the steps of:

  ◦ repeating the steps of calculating (331, 431, 222, 333, 433) the variables EU(i) and dif_sU(i) for each of the multiple strings cBe(i) previously obtained;
  ◦ computing multiple Hamming distances as the sum of the Hamming weights of the N strings *dif_sU(i)* calculated for each of the multiple strings cBe(i); and
  ◦ ranking the strings cBe(i) according to their Hamming distances.

**12.** A method according to any of claims 9 to 11, further comprising the steps of generating a set of strings mA(i) by choosing a nonce as a binary string, encrypting said strings mA(i) with KUA, sending (213, 313, 413) the encrypted strings to the client and receiving encrypted strings mU(i) from the client, decrypting said string as mU(i)' and applying both to the N strings dif_sU(i), which results as

$$dif\_sU(i) = PQ.Decode(skA, EU(i) \; XOR \; mU(i)' \; XOR \; mA(i));$$

if a code-based cryptosystem is employed; or:

$$dif\_sU(i) = PQ.Decrypt(skA, EU(i)) \; XOR \; mU(i)' \; XOR \; mA(i);$$

if a lattice-based cryptosystem is employed; and wherein the N strings cBv(i) are calculated by the client as:

$$cBv(i) = PQ.Encode(pkA, eUv(i)) \; XOR \; mU(i) \; XOR \; mA(i)'$$

if a code-based cryptosystem is employed or:

$$cBv(i) = PQ.Encrypt(pkA, eUv(i) \; XOR \; mU(i) \; XOR \; mA(i)')$$

if a lattice-based cryptosystem is employed; wherein mA(i)' are obtained by the client by decrypting with KUA' the encrypted mA(i) received.

**13.** The method according to any of claims 9 to 12, wherein the agreed post-quantum cryptographic algorithms used are a code-based public-key cryptosystem employed to protect the data, selected from a Classic McEliece system or a BIKE system, so that the encoding, PQ.Encode, and decoding, PQ.Decode, algorithms correspond to the encoding and decoding algorithms of those cryptosystems.

**14.** The method according to any of claims 9 to 12, wherein the agreed post-quantum cryptographic algorithms used are a lattice-based public-key cryptosystem employed to protect the biometric data, selected from a Crystals-Kyber cryptosystem, or a Saber cryptosystem, so that the encryption, PQ.Encrypt, and decryption, PQ.Decrypt, algorithms correspond to the encryption and decryption algorithms of those cryptosystems.

**15.** A cryptographic system comprising:

  - a device functioning as a client (1), configured to perform the steps of the method for protecting sensitive information according to any of claims 1 to 4,
  - a data base (2), which can be a distributed ledger,
  - a server functioning as an authentication party (3), authenticator or identifier, configured to perform the steps of the authentication party (3) in claims 9 to 14, or configured to perform the steps of the identifier (3) in claim 11,
- a server functioning as a matcher (4), configured to perform the steps of the matcher (4) in claim 10.

**Patentansprüche**

1. **Computerimplementiertes** Verfahren zum Schutz von sensiblen Informationen unter Verwendung von vereinbarten Post-Quantum-Kryptografiealgorithmen, basierend auf dem Decodierungsproblem für zufällige binäre lineare Codes oder auf der Schwierigkeit von Gitterproblemen, umfassend:

- Generieren (103) eines Satzes von N privaten Zeichenfolgen xU(i), wobei i eine Zahl zwischen 1 und N ist, oder eines (201, 301, 401) Paares aus privatem und öffentlichem Schlüssel (skA, pkA):

○ im Falle des Generierens (103) der N privaten Zeichenfolgen xU(i), Verwenden eines Satzes von N zuvor generierten (102) einheitlichen zufälligen k-Bit-Zeichenfolgen skU(i) und deren Umwandlung in private Zeichenfolgen xU(i) unter Verwendung einer binären *n * k*-Matrix G, die eine Generatormatrix eines Codes der Dimension n und des Ranges k ist, wenn Post-Quantum-Kryptografiealgorithmen basierend auf dem Decodierungsproblem für zufällige binäre lineare Codes oder eine Matrix im Zusammenhang mit einem "Learning With Errors"-Problem mit n Stichproben und k Vermutungen verwendet werden, wenn Post-Quantum-Kryptografiealgorithmen basierend auf der Schwierigkeit von Gitterproblemen verwendet werden; oder
○ im Falle des Generierens (201, 301, 401) privater und öffentlicher Schlüssel (skA, pkA), Verwenden eines Schlüsselgenerierungsalgorithmus der vereinbarten, auf binären linearen Codes basierenden Post-Quantum-Kryptografiealgorithmen oder der vereinbarten auf Gittern basierenden Post-Quantum-Kryptografiealgorithmen;

- Erhalten (104, 202, 302, 402, 215, 315, 415) eines Satzes von Merkmalen zur Darstellung der sensiblen Informationen und wiederum Darstellung der Merkmale durch binäre Daten, die die Abstände zwischen den Merkmalen beibehalten, wodurch eine binäre Zeichenfolge sUe erstellt wird:
wobei das Verfahren durch Folgendes gekennzeichnet ist:

- Aufteilen der binären Zeichenfolge sUe in N Teilzeichenfolgen sUe(i) mit jeweils z(i) Bits, wobei z(i) gleich oder kleiner als *n* ist und im Falle des Verwendens eines binären linearen Codes oder bei einem "Learning With Errors"-Problem, z(i) gleich oder größer als eine zuvor fixierte maximale Anzahl von Fehlern (t) ist; und wobei i eine Zahl zwischen 1 und N ist;
- Berechnen (105, 203, 303, 403, 216, 316, 416) der Zeichenfolgen bUe(i) mit n Bits durch Anwenden einer geheimen Auffüllung auf die Teilzeichenfolgen sUe(i);
- Transformieren (107, 205, 305, 405, 218, 318, 418) der Zeichenfolgen eUe(i) in Zeichenfolgen cBe(i) durch

○ Berechnen (107) von:

$$cBe(i) = xU(i) \; XOR \; eUe(i)$$

falls die privaten Zeichenfolgen xU(i) generiert wurden; oder
○ Berechnen (205, 305, 405, 218, 318, 418) von:

$$cBe(i) = PQ.Encode/PQ.Encrypt \; (pkA, eUe(i))$$

falls (skA, pkA) generiert wurden, und wobei PQ.Encode/PQ.Encrypt ein Codierungs- oder Verschlüsselungsalgorithmus der vereinbarten Post-Quantum-Kryptografiealgorithmen ist, bei denen es sich um Folgendes handelt:

■ ein codebasiertes Kryptosystem mit öffentlichem Schlüssel, ausgewählt aus: einem McEliece- oder einem Niederreiter-System; oder
■ ein gitterbasiertes Kryptosystem mit öffentlichem Schlüssel, ausgewählt aus Systemen, die auf "Module Learning with Errors", M-LWE, oder auf "Module Learning with Rounding", M-LWR, basieren; und

wobei die Zeichenfolgen eUe(i) gleich bUe(i) sind, falls keine zusätzlichen Daten eingebunden werden, und sichergestellt ist, dass das Hamming-Gewicht jeder eUe(i) größer als t ist, mit Ausnahme des Falls, in dem der Algorithmus PQ.Encrypt verwendet wird.

2. Computerimplementiertes Verfahren nach Anspruch 1, wobei die sensiblen Informationen durch Merkmale dargestellt werden, die etwas Rauschen enthalten können, wobei die Merkmale vorzugsweise aus Messungen von Eigenschaften von Personen und Dingen erhalten werden, die eindeutig mit ihren physischen Entitäten verknüpft sind, wie etwa biometrische Eigenschaften von Personen.

3. Computerimplementiertes Verfahren nach einem der vorhergehenden Ansprüche, ferner umfassend die folgenden Schritte:

- Erhalten (106, 204, 304, 404, 217, 317, 417) zusätzlicher binärer Daten, die die Abstände zueinander beibehalten, wodurch die binäre Zeichenfolge sUo erstellt wird,
- Aufteilen der binären Zeichenfolge sUo in N Teilzeichenfolgen sUo(i) mit jeweils n Bits; und wobei die Zeichenfolgen eUe(i) durch Folgendes berechnet werden:

$$eUe(i) = bUe(i) \ XOR \ sUo(i)$$

wobei sichergestellt wird, dass das Hamming-Gewicht jeder Zeichenfolge eUe(i) größer als t ist, mit Ausnahme des Falls, in dem der Algorithmus PQ.Encrypt verwendet wird.

4. Computerimplementiertes Verfahren nach einem der vorhergehenden Ansprüche, wobei die mit sensiblen Informationen verknüpften binären Daten und/oder die zusätzlichen binären Daten nicht-binäre Merkmale darstellen, die unter Beibehaltung der Abstände zueinander binarisiert werden, wodurch die binären Zeichenfolgen sUe und/oder sUo erstellt werden.

5. Computerimplementiertes Verfahren zum Anpassen von geschützten Informationen, das von einer Partei (1) durchgeführt wird, die dazu konfiguriert ist, sensible Informationen zu erhalten und zu schützen und die erhaltenen und geschützten sensiblen Informationen an zuvor in einer Registrierungsphase gespeicherte Zeichenfolgen cBe(i) anzupassen, wobei diese als cBe(i) = xU(i) XOR eUe(i) unter Verwendung des Verfahrens nach einem der Ansprüche 1 bis 4 erhalten werden (107), und wobei die Zeichenfolgen cBe(i) geschützte sensible Informationen als geschützte Vorlage darstellen, mit der die anzupassenden sensiblen Informationen zu vergleichen sind, und wobei ein Schwellenwert für die Unähnlichkeit Th zuvor vereinbart wird, wobei das Verfahren Folgendes umfasst:

- Erhalten (109) von binären Daten, die die Abstände zueinander beibehalten und mit sensiblen Informationen verknüpft sind, wodurch eine binäre Zeichenfolge sUv erstellt wird,
- Aufteilen der binären Zeichenfolge in N Teilzeichenfolgen sUv(i) mit jeweils z(i) Bits, wobei z(i) gleich oder kleiner als n ist und im Falle des Verwendens eines binären linearen Codes oder bei einem "Learning With Errors"-Problem, z(i) gleich oder größer als t ist und wobei i eine Zahl zwischen 1 und N ist;
- Berechnen (110) von Zeichenfolgen bUv(i) mit n Bits, indem auf die Teilzeichenfolgen sUv(i) eine geheime Auffüllung angewendet wird, die der in der Registrierungsphase verwendeten gleicht;
- Abrufen (112) der zuvor gespeicherten Zeichenfolgen cBe(i);
- Berechnen von:

$$cBe(i) \ XOR \ eUv(i)$$

wobei eUv(i)=bUv(i) ist, falls keine zusätzlichen Daten eingebunden sind;
- Anwenden (113) eines Decodierungsalgorithmus für binäre lineare Codes auf das Ergebnis der Berechnung, wodurch xU(i)' erhalten wird;
- Berechnen (114) von:

$$eUe(i)' = xU(i)' \ XOR \ cBe(i)$$

$$dif\_sU(i)' = eUe(i)' \ XOR \ eUv(i)$$

- Berechnen eines Abstands D aus dem dif_sU(i)', vorzugsweise eines Hamming-Abstands:

$$HD = \sum_{i=1}^{N} \textit{Hamming-Gewicht}(dif\_sU(i)')$$

- Anpassen der sensiblen Informationen, sodass, falls D größer als Th ist, auf einen Anpassungsfehler geschlossen wird (115), andernfalls auf einen Anpassungserfolg geschlossen wird (115).

6. Verfahren nach Anspruch 5, wobei mehrere vereinbarte Schwellenwerte der Unähnlichkeit Th(j) vereinbart werden und mehrere Abstände D(j), vorzugsweise Hamming-Abstände, berechnet werden als:

$$HD(j) = \sum_{i=j}^{j+m} \textit{Hamming-Gewicht}(dif\_sU(i)')$$

wobei j eine Zahl gleich oder größer als 1 ist und j+m eine Zahl gleich oder kleiner als N ist, die an die sensiblen Informationen angepasst sind, sodass, falls die aus den Abständen D(j) erhaltenen Werte gleich oder kleiner als die Schwellenwerte Th(j) sind, dann auf einen Anpassungserfolg geschlossen wird (115) und andernfalls auf einen Anpassungsfehler geschlossen wird (115).

7. Verfahren nach einem der Ansprüche 5 bis 6, wobei eine Hash-Funktion H zuvor vereinbart wird und die Zeichenfolgen H(skU(i)) in einer Registrierungsphase zuvor gespeichert werden (108), und wobei der Schritt des Anpassens auch Folgendes enthält:

   - Anwenden eines Decodierungsalgorithmus von binären linearen Codes auf xU(i)', um skU(i)' zu erhalten,
   - Bestimmen, ob der Schritt des Erhaltens von xU(i)' und skU(i)' nicht ermöglicht, alle Komponenten wiederherzustellen, und dann Schließen auf einen Anpassungsfehler; und
   - Anwenden der vereinbarten Hash-Funktion auf die berechneten skU(i)' und Abrufen der Zeichenfolgen H(skU(i)),
   - falls H(skU(i)') = H(skU(i)) für alle i, dann auf einen Anpassungserfolg (115) schließen, andernfalls auf einen Anpassungsfehler schließen (115).

8. Verfahren nach Anspruch 7, das es der Partei (1), die zum Anpassen der Informationen konfiguriert ist, ferner ermöglicht, sichere elektronische Transaktionen durchzuführen, wobei in einer Registrierungsphase ein Schlüsselgenerierungsalgorithmus unter Verwendung von Bits aus dem Satz von Zeichenfolgen skU(i) vereinbart wird, um einen kryptografischen Schlüssel zu generieren, ferner umfassend den folgenden Schritt:

   - falls das Anpassen erfolgreich ist, Auswählen der Bits aus dem Satz von berechneten Zeichenfolgen skU(i)', Wiederherstellen des kryptografischen Schlüssels unter Verwendung des vereinbarten Schlüsselgenerierungsalgorithmus und Verwenden des kryptografischen Schlüssels, um sichere elektronische Transaktionen durchzuführen.

9. Computerimplementiertes Verfahren zum Anpassen von geschützten Informationen, das von mindestens zwei Parteien durchgeführt wird, einem Client (1), der dazu konfiguriert ist, sensible Informationen zu erhalten und zu schützen, und einer Authentifizierungspartei (3), die dazu konfiguriert ist, in einer Verifizierungsphase die sensiblen Informationen an die in einer Registrierungsphase als Vorlage zuvor gespeicherten (208, 308, 408) sensiblen Informationen in Form von Zeichenfolgen cBe(i) anzupassen, wobei diese unter Verwendung des Verfahrens nach einem der Ansprüche 1 bis 4 erhalten werden, und vorzugsweise einer oder mehreren Hilfsparteien (4), das die folgenden Schritte umfasst:

   - Aufbauen sicherer Kommunikationskanäle zwischen dem Client (1) und jeweils der Authentifizierungspartei (3) und/oder den Hilfsparteien (4) unter Verwendung eines vereinbarten (201, 301, 401) Schlüsselkapselungsmechanismus (KEM) unter Berücksichtigung der Tatsache, dass die Authentifizierungspartei (3) und/oder die Hilfsparteien (4) ein Paar langfristiger privater und öffentlicher Schlüssel aufweisen, die unter Einsatz eines Schlüsselgenerierungsalgorithmus des KEM generiert werden und die Informationen auf sichere Weise untereinander austauschen, wobei entweder die Authentifizierungspartei (3) oder die Hilfsparteien (4) die folgenden Stufen durchführen:

- ∘ Berechnen (211, 311, 411, 323, 423) eines Chiffretextes c und eines gemeinsamen Geheimnisses K unter Verwendung eines Kapselungsalgorithmus eines vereinbarten Schlüsselkapselungsmechanismus (KEM) und unter Verwendung eines kurzlebigen öffentlichen Schlüssels pk, der vom Client empfangen und vom Client unter Einsatz eines Schlüsselgenerierungsalgorithmus des KEM generiert (209, 309, 409, 321, 421) wird;
- ∘ Berechnen eines weiteren gemeinsamen Geheimnisses KA' unter Verwendung seines langfristigen privaten Schlüssels und Anwenden eines Entkapselungsalgorithmus auf einen Chiffretext cA, der berechnet wurde, sowie von KA unter Verwendung seines langfristigen öffentlichen Schlüssels und Anwenden des Kapselungsalgorithmus, wobei cA vom Client empfangen und vom Client berechnet wird, der auch KA berechnet hat;
- ∘ Berechnen (212, 312, 412, 324, 424) eines gemeinsamen Schlüssels KUA durch Anwenden einer zuvor vereinbarten Hash-Funktion auf die gemeinsamen Geheimnisse K und KA';
- ∘ Senden (213, 313, 413, 325, 425) des Chiffretextes c an den Client;

- Verwenden, durch entweder die Authentifizierungspartei (3) oder die Hilfsparteien (4), eines vereinbarten symmetrischen Verschlüsselungsschemas mit dem Client, um mit dem mit dem Client geteilten KUA N vom Client empfangene Zeichenfolgen cBv(i)' zu entschlüsseln (220, 329, 429), die vom Client durch Anwenden der Schritte des Verfahrens nach den Ansprüchen 1 bis 4 berechnet (218, 318, 418) werden, um sensible Informationen zu schützen, die in einer Verifizierungsphase anzupassen sind, unter Verwendung von Post-Quantum-Kryptografiealgorithmen und unter Verwendung des langfristigen öffentlichen Schlüssels der Authentifizierungspartei (3), und wobei die cBv(i) vom Client unter Verwendung des vereinbarten symmetrischen Verschlüsselungsschemas mit KUA' verschlüsselt sind, welcher mit KUA übereinstimmt, wobei KUA' vom Client durch Anwendung einer zuvor vereinbarten Hash-Funktion auf KA und auf K' erhalten wird (214, 314, 414, 326, 426), wobei K' vom Client durch Entkapseln des empfangenen Chiffretextes c unter Verwendung des kurzlebigen privaten Schlüssels sk, der mit pk verknüpft ist, erhalten wird (214, 314, 414, 326, 426), wobei sk und pk vom Client durch Einsetzen eines Schlüsselgenerierungsalgorithmus des KEM generiert werden (209, 309, 409, 321, 421);
- Erhalten (221, 330, 430), durch entweder die Authentifizierungspartei (3) oder die Hilfsparteien (4), von N Zeichenfolgen cBe(i), die zuvor in einer Registrierungsphase gespeichert wurden und geschützte sensible Informationen als geschützte Vorlage darstellen,
- Berechnen (222, 331, 431), durch entweder die Authentifizierungspartei (3) oder die Hilfsparteien (4), der Variablen EU(i) als:

$$EU(i) = cBv(i)' \ XOR \ cBe(i)$$

falls ein codebasiertes Kryptosystem eingesetzt wird; oder:

$$EU(i) = cBv(i)' - cBe(i)$$

falls ein gitterbasiertes Kryptosystem eingesetzt wird, das das ganzzahlige arithmetische Modul q mit q>2 verwendet;
- Berechnen (222, 333, 433) von N Zeichenfolgen dif_sU(i) durch die Authentifizierungspartei (3) unter Verwendung ihres langfristigen privaten Schlüssels skA und des Decodierungsalgorithmus PQ.Decode oder des Entschlüsselungsalgorithmus PQ.Decrypt:

$$dif\_sU(i) = PQ.Decode/PQ.Decrypt \ (skA, EU(i)).$$

10. Verfahren nach Anspruch 9, wobei die Hilfsparteien (4) einen Anpasser (4) umfassen, sodass der Schritt des Aufbaus sicherer Kommunikationskanäle zwischen dem Client (1) und der Authentifizierungspartei (3) und zwischen dem Client (1) und dem Anpasser (4) durchgeführt wird, unter der Annahme, dass die Kommunikation zwischen dem Anpasser (4) und der Authentifizierungspartei (3) sicher ist, und wobei die Schritte des Erhaltens (329, 429) von N Zeichenfolgen cBv(i)', des Erhaltens (330, 430) von N Zeichenfolgen cBe(i) und des Berechnens (331, 431) der Variablen EU(i) vom Anpasser (4) durchgeführt werden, der die Informationen an die Authentifizierungspartei (3) sendet, um die Schritte des Berechnens (333, 433) von N Zeichenfolgen dif_sU(i) durchzuführen.

11. Verfahren nach einem der Ansprüche 9 bis 10, wobei die Authentifizierungspartei (3) ein Authentifikator oder ein Identifikator ist:

falls es sich um einen Authentifikator handelt, Anpassung folgendermaßen:

◦ falls das Decodieren der N Zeichenfolgen dif_sU(i) nicht möglich ist, auf einen Anpassungsfehler schließen (223, 334, 434); und
◦ Berechnen eines Hamming-Abstands als Summe der Hamming-Gewichte der N Zeichenfolgen dif_sU(i), falls das Ergebnis größer als der Schwellenwert Th ist, dann Schließen (224, 335, 435) auf einen Anpassungsfehler, und andernfalls Schließen (225, 336, 436) auf einen Anpassungserfolg;

- falls es sich um einen Identifikator handelt, wobei mehrere Zeichenfolgen cBe(i) zuvor als Vorlage in der Registrierungsphase erhalten werden (205, 305, 405), wobei das Verfahren ferner die folgenden Schritte umfasst:

◦ Wiederholen der Schritte des Berechnens (331, 431, 222, 333, 433) der Variablen EU(i) und dif_sU(i) für jede der zuvor erhaltenen mehreren Zeichenfolgen cBe(i);
◦ Berechnen mehrerer Hamming-Abstände als Summe der Hamming-Gewichte der N Zeichenfolgen $dif\_sU(i)$, die für jede der mehreren Zeichenfolgen cBe(i) berechnet werden; und
◦ Rangordnen der Zeichenfolgen cBe(i) nach ihren Hamming-Abständen.

12. Verfahren nach einem der Ansprüche 9 bis 11, ferner umfassend die Schritte des Generierens eines Satzes von Zeichenfolgen mA(i) durch Wählen einer Nonce als binäre Zeichenfolge, des Verschlüsselns der Zeichenfolgen mA(i) mit KUA, des Sendens (213, 313, 413) der verschlüsselten Zeichenfolgen an den Client und des Empfangens verschlüsselter Zeichenfolgen mU(i) vom Client, des Entschlüsselns der Zeichenfolge als mU(i)' und des Anwendens beider auf die N Zeichenfolgen dif_sU(i), was Folgendes ergibt

$$dif\_sU(i) = PQ.Decode(skA, EU(i)\ XOR\ mU(i)'\ XOR\ mA(i));$$

falls ein codebasiertes Kryptosystem eingesetzt wird; oder:

$$dif\_sU(i) = PQ.Decrypt(skA, EU(i))\ XOR\ mU(i)'\ XOR\ mA(i);$$

falls ein gitterbasiertes Kryptosystem eingesetzt wird; und wobei die N Zeichenfolgen cBv(i) vom Client folgendermaßen berechnet werden:

$$cBv(i) = PQ.Encode(pkA, eUv(i))\ XOR\ mU(i)\ XOR\ mA(i)'$$

falls ein codebasiertes Kryptosystem eingesetzt wird, oder:

$$cBv(i) = PQ.Encrypt(pkA, eUv(i)\ XOR\ mU\ (i)\ XOR\ mA(i)')$$

falls ein gitterbasiertes Kryptosystem eingesetzt wird; wobei mA(i)' vom Client durch Entschlüsseln des empfangenen verschlüsselten mA(i) mit KUA' erhalten werden.

13. Verfahren nach einem der Ansprüche 9 bis 12, wobei die verwendeten vereinbarten Post-Quantum-Kryptographiealgorithmen ein codebasiertes Kryptosystem mit öffentlichem Schlüssel sind, das zum Schutz der Daten eingesetzt wird, ausgewählt aus einem Classic-McEliece-System oder einem BIKE-System, sodass die Codierungs-, PQ.Encode, und Decodierungsalgorithmen, PQ.Decode, den Codierungs- und Decodierungsalgorithmen dieser Kryptosysteme entsprechen.

14. Verfahren nach einem der Ansprüche 9 bis 12, wobei die verwendeten vereinbarten Post-Quantum-Kryptografiealgorithmen ein gitterbasiertes Kryptosystem mit öffentlichem Schlüssel sind, das zum Schutz der biometrischen Daten verwendet wird, ausgewählt aus einem Crystals-Kyber-Kryptosystem oder einem Saber-Kryptosystem, sodass die Verschlüsselungs-, PQ.Encrypt, und Entschlüsselungsalgorithmen, PQ.Decrypt, den Verschlüsselungs- und Entschlüsselungsalgorithmen dieser Kryptosysteme entsprechen.

**15.** Kryptografisches System, umfassend:

- eine Vorrichtung, die als Client (1) fungiert und so konfiguriert ist, dass sie die Schritte des Verfahrens zum Schutz sensibler Informationen nach einem der Ansprüche 1 bis 4 durchführt,
- eine Datenbank (2), die ein verteiltes Ledger sein kann,
- einen Server, der als Authentifizierungspartei (3), Authentifikator oder Identifikator fungiert und dazu konfiguriert ist, die Schritte der Authentifizierungspartei (3) in den Ansprüchen 9 bis 14 durchzuführen, oder dazu konfiguriert ist, die Schritte des Identifikators (3) in Anspruch 11 durchzuführen,
- einen Server, der als Anpasser (4) fungiert und so konfiguriert ist, dass er die Schritte des Anpassers (4) nach Anspruch 10 durchführt.

**Revendications**

**1.** Procédé mis en œuvre par ordinateur pour protéger des informations sensibles, en utilisant des algorithmes cryptographiques post-quantiques convenus basés sur le problème de décodage pour des codes linéaires binaires aléatoires ou sur la dureté de problèmes de réseau, comprenant :

- la génération (103) d'un ensemble de N chaînes privées xU(i), i étant un nombre compris entre 1 et N, ou une paire (201, 301, 401) de clés privées et publiques (skA, pkA) :

  ○ en cas de génération (103) des N chaînes privées xU(i), utiliser un ensemble de N chaînes aléatoires uniformes de k bits, skU(i), précédemment générées (102), et les convertir en chaînes privées xU(i), en utilisant une matrice binaire $n * k$ G, qui est une matrice génératrice d'un code de dimension $n$ et de rang $k$, lors de l'utilisation d'algorithmes cryptographiques post-quantiques basés sur le problème de décodage pour des codes linéaires binaires aléatoires ou une matrice liée à un problème d'apprentissage avec erreurs, avec $n$ échantillons et $k$ estimations, lors de l'utilisation d'algorithmes cryptographiques post-quantiques basés sur la dureté des problèmes de réseau ; ou
  ○ en cas de génération (201, 301, 401) de clés privées et publiques (skA, pkA), utiliser un algorithme de génération de clés des algorithmes cryptographiques post-quantiques convenus basés sur des codes binaires linéaires ou des algorithmes cryptographiques post-quantiques convenus basés sur un réseau ;

- l'obtention (104, 202, 302, 402, 215, 315, 415) d'un ensemble de caractéristiques pour représenter les informations sensibles et à son tour la représentation des caractéristiques par des données binaires, qui préservent les distances entre les caractéristiques, créant ainsi une chaîne binaire sUe :
dans lequel le procédé est **caractérisé par** :

  - la division de la chaîne binaire sUe en N sous-chaînes sUe(i) avec z(i) bits chacune, z(i) étant égal ou inférieur à $n$ et, dans le cas de l'utilisation d'un code linéaire binaire ou d'un problème d'apprentissage avec erreurs, z(i) étant égal ou supérieur à un nombre maximal d'erreurs (t) fixé au préalable ; et i étant un nombre compris entre 1 et N ;
  - le calcul (105, 203, 303, 403, 216, 316, 416) de chaînes bUe(i), avec n bits, en appliquant un remplissage secret aux sous-chaînes sUe(i) ;
  - la transformation (107, 205, 305, 405, 218, 318, 418) de chaînes eUe(i) en chaînes cBe(i) par

    ○ le calcul (107) :

$$cBe(i) = xU(i) \; XOR \; eUe(i)$$

en cas de génération des chaînes privées xU(i) ; ou
o le calcul (205, 305, 405, 218, 318, 418) :

$$cBe(i) = PQ.Encode/PQ.Encrypt \; (pkA, eUe(i))$$

en cas de génération de (skA, pkA) et dans lequel PQ.Encode/PQ.Encrypt est un algorithme de codage ou de chiffrement des algorithmes cryptographiques post-quantiques convenus, qui sont :

- un cryptosystème à clé publique basé sur un code choisi parmi : un système McEliece ou un système Niederreiter ; ou
- un cryptosystème à clé publique basé le réseau choisi parmi des systèmes basés sur l'apprentissage avec erreurs sur les modules, M-LWE, ou basés sur l'apprentissage avec l'arrondi sur les modules, M-LWR ; et

dans lequel les chaînes eUe(i) sont égales à bUe(i) si aucune donnée supplémentaire n'est incorporée et qu'il est garanti que le poids de Hamming de chaque eUe(i) est supérieur à t, sauf dans le cas où l'algorithme PQ.Encrypt est utilisé.

2. Procédé mis en œuvre par ordinateur selon la revendication 1, dans lequel les informations sensibles sont représentées par des caractéristiques qui peuvent inclure du bruit, les caractéristiques étant de préférence obtenues à partir de mesures de traits de personnes et d'objets qui sont associés de manière univoque à leurs entités physiques, tels que les traits biométriques de personnes.

3. Procédé mis en oeuvre par ordinateur selon l'une quelconque des revendications précédentes, comprenant en outre les étapes consistant à :

- obtenir (106, 204, 304, 404, 217, 317, 417) des données binaires supplémentaires, qui préservent les distances entre elles, créant ainsi la chaîne binaire sUo,
- diviser la chaîne binaire sUo en N sous-chaînes sUo(i) de n bits chacune ; et dans lequel les chaînes eUe(i) sont calculées par :

$$eUe(i) = bUe(i)\ XOR\ sUo(i)$$

en garantissant que le poids de Hamming de chaque chaîne eUe(i) est supérieur à t, sauf dans le cas où l'algorithme PQ.Encrypt est utilisé.

4. Procédé mis en œuvre par ordinateur selon l'une quelconque des revendications précédentes, dans lequel les données binaires associées à des informations sensibles et/ou aux données binaires supplémentaires représentent des caractéristiques non binaires qui sont binarisées en préservant les distances entre elles, créant ainsi les chaînes binaires sUe et/ou sUo.

5. Procédé mis en œuvre par ordinateur pour mettre en correspondance des informations protégées, mis en œuvre par une partie (1) configurée pour obtenir et protéger des informations sensibles et pour mettre en correspondance lesdites informations sensibles obtenues et protégées avec des chaînes cBe(i) précédemment stockées lors d'une phase d'enrôlement, étant obtenues (107) sous la forme cBe(i) = xU(i) XOR eUe(i) en utilisant le procédé selon l'une quelconque des revendications 1 à 4, et les chaînes cBe(i) représentant des informations sensibles protégées en tant que modèle protégé auquel comparer les informations sensibles à mettre en correspondance et dans lequel une valeur seuil de dissemblance Th est préalablement convenue, le procédé comprenant :

- l'obtention (109) de données binaires, qui préservent les distances entre elles, associées à des informations sensibles, créant ainsi une chaîne binaire sUv,
- la division de la chaîne binaire en N sous-chaînes sUv(i) de z(i) bits chacune, z(i) étant égal ou inférieur à n et, en cas d'utilisation d'un code linéaire binaire ou d'un problème d'apprentissage avec erreurs, z(i) étant égal ou supérieur à t, et i étant un nombre compris entre 1 et N ;
- le calcul (110) de chaînes bUv(i), à n bits, en appliquant un remplissage secret, égal à celui utilisé dans la phase d'enrôlement, aux sous-chaînes sUv(i) ;
- la récupération (112) des chaînes cBe(i) précédemment stockées ;
- le calcul :

$$cBe(i)\ XOR\ eUv(i)$$

dans lequel eUv(i)=bUv(i) si aucune donnée supplémentaire n'est incorporée ;
- l'application (113) d'un algorithme de décodage de codes linéaires binaires au résultat du

calcul, obtenant ainsi xU(i)' ;
- le calcul (114) :

$$eUe(i)' = xU(i)'\,XOR\,cBe(i)$$

$$dif\_sU(i)' = eUe(i)'\,XOR\,eUv(i)$$

- le calcul d'une distance D à partir de dif_sU(i)', de préférence, une distance de Hamming :

$$HD = \sum_{i=1}^{N} Poids\ de\ Hamming(dif\_sU(i)')$$

- la mise en correspondance des informations sensibles, de telle sorte que si D est supérieur à Th, alors la conclusion (115) d'un échec de mise en correspondance, sinon la conclusion (115) d'un succès de mise en correspondance.

6. Procédé selon la revendication 5, dans lequel plusieurs valeurs seuils convenues de dissemblance Th(j) sont convenues et plusieurs distances D(j), de préférence des distances de Hamming, sont calculées comme :

$$HD(j) = \sum_{i=j}^{j+m} Poids\ de\ Hamming(dif\_sU(i)')$$

dans lequel j est un nombre égal ou supérieur à 1 et j+m est un nombre égal ou inférieur à N, correspondant aux informations sensibles, de telle sorte que si les valeurs obtenues à partir des distances D(j) sont égales ou inférieures aux seuils Th(j), alors la réussite de mise en correspondance est conclue (115) et sinon, l'échec de mise en correspondance est conclu (115).

7. Procédé selon l'une quelconque des revendications 5 à 6, dans lequel une fonction de hachage H est préalablement convenue et des chaînes H(skU(i)) sont préalablement stockées (108) lors d'une phase d'enrôlement, et dans lequel l'étape de mise en correspondance comporte également :

- l'application d'un algorithme de décodage de codes linéaires binaires à xU(i)' pour obtenir skU(i)',
- la détermination de si l'étape d'obtention de xU(i)' et skU(i)' ne permet pas de récupérer tous les composants, puis la conclusion d'un échec de mise en correspondance ; et
- l'application de la fonction de hachage convenue au skU(i)' calculé et récupérer les chaînes H(skU(i)),
- si H(skU(i)') = H(skU(i)) pour tous les i, alors la conclusion (115) de la réussite de mise en correspondance, sinon la conclusion (115) de l'échec de mise en correspondance.

8. Procédé selon la revendication 7, qui permet en outre à la partie (1), configurée pour mettre en correspondance les informations, d'effectuer des transactions électroniques sécurisées, dans lequel dans une phase d'enrôlement un algorithme de génération de clé utilisant des bits de l'ensemble de chaînes skU(i) est convenu pour générer une clé cryptographique, comprenant en outre l'étape consistant à :

- si la mise en correspondance est réussie, choisir les bits dans l'ensemble de chaînes calculées skU(i)', reconstruire la clé cryptographique en utilisant l'algorithme de génération de clé convenu, et utiliser la clé cryptographique pour effectuer des transactions électroniques sécurisées.

9. Procédé mis en œuvre par ordinateur pour mettre en correspondance des informations protégées, mis en œuvre par au moins deux parties, un client (1) configuré pour obtenir et protéger des informations sensibles, une partie d'authentification (3) configurée, dans une phase de vérification, pour mettre en correspondance les informations sensibles avec les informations sensibles sous la forme de chaînes cBe(i), préalablement stockées (208, 308, 408) en tant que modèle, dans une phase d'enrôlement, obtenues en utilisant le procédé selon l'une quelconque des revendications 1 à 4, et, de préférence, une ou plusieurs parties auxiliaires (4), comprenant les étapes consistant à :

- établir des canaux de communication sécurisés entre le client (1) et chacune parmi la partie d'authentification (3) et/ou les parties auxiliaires (4) en utilisant un mécanisme d'encapsulation de clé (KEM) convenu (201, 301, 401), en considérant que la partie d'authentification (3) et/ou les parties auxiliaires (4) disposent d'une paire de clés privées et publiques à long terme générées en utilisant un algorithme de génération de clé du KEM et qu'elles partagent des informations de manière sécurisée entre elles, dans lequel l'une parmi la partie d'authentification (3) ou les parties auxiliaires (4) met en œuvre les phases consistant à :

⚬ calculer (211, 311, 411, 323, 423) un texte chiffré c et un secret partagé K en utilisant un algorithme d'encapsulation d'un mécanisme d'encapsulation de clé (KEM) convenu et en utilisant une clé publique éphémère pk reçue du client et générée (209, 309, 409, 321, 421) par le client en employant un algorithme de génération de clé du KEM ;
⚬ calculer un autre secret partagé KA' en utilisant sa clé privée à long terme et en appliquant un algorithme de décapsulation à un texte chiffré cA qui a été calculé, ainsi que KA, en utilisant sa clé publique à long terme et en appliquant l'algorithme d'encapsulation, cA étant reçu du client et calculé par le client, qui a également calculé KA ;
⚬ calculer (212, 312, 412, 324, 424) une clé partagée KUA en appliquant une fonction de hachage préalablement convenue aux secrets partagés K et KA' ;
⚬ envoyer (213, 313, 413, 325, 425) le texte chiffré c au client ;

- utiliser par l'une parmi la partie d'authentification (3) ou les parties auxiliaires (4) un schéma de chiffrement symétrique convenu avec le client pour déchiffrer (220, 329, 429), avec la KUA partagée avec le client, N chaînes cBv(i)', reçues du client et calculées (218, 318, 418) par le client en appliquant les étapes du procédé selon les revendications 1 à 4 pour protéger des informations sensibles à mettre en correspondance dans une phase de vérification, en utilisant des algorithmes cryptographiques post-quantiques et en utilisant la clé publique à long terme de la partie d'authentification (3), et les cBv(i) sont chiffrées par le client, en utilisant le schéma de chiffrement symétrique convenu, avec KUA', qui coïncide avec KUA, dans lequel KUA' est obtenue (214, 314, 414, 326, 426) par le client en appliquant une fonction de hachage préalablement convenue à KA et à K', dans lequel K' est obtenue (214, 314, 414, 326, 426) par le client en décapsulant le texte chiffré reçu c en utilisant la clé privée éphémère sk, associée à pk, dans lequel sk et pk sont générées (209, 309, 409, 321, 421) par le client en employant un algorithme de génération de clé du KEM ;
- obtenir (221, 330, 430) par l'une parmi la partie d'authentification (3) ou les parties auxiliaires (4) N chaînes cBe(i), précédemment stockées lors d'une phase d'enrôlement représentant des informations sensibles protégées en tant que modèle protégé,
- calculer (222, 331, 431) par l'une parmi la partie d'authentification (3) ou les parties auxiliaires (4) les variables EU(i) comme :

$$EU(i) = cBv(i)' \text{ XOR } cBe(i)$$

si un cryptosystème basé sur un code est employé ; ou :

$$EU(i) = cBv(i)' - cBe(i)$$

si un cryptosysteme basé sur un réseau est employé qui utilise le module arithmétique entier q, avec q>2 ;
- calculer (222, 333, 433) par le prestataire d'authentification (3), en utilisant sa clé privée à long terme skA et l'algorithme de décodage PQ.Decode ou l'algorithme de déchiffrement PQ.Decrypt, N chaînes dif_sU(i) :

$$dif\_sU(i) = PQ.Decode/PQ.Decrypt\ (skA,EU(i)).$$

10. Procédé selon la revendication 9, dans lequel les parties auxiliaires (4) comprennent un module de mise en correspondance (4), de telle sorte que l'étape d'établissement de canaux de communication sécurisés est mise en œuvre entre le client (1) et la partie d'authentification (3) et entre le client (1) et le module de mise en correspondance (4), en supposant que la communication entre le module de mise en correspondance (4) et la partie d'authentification (3) est sécurisée, et dans lequel les étapes d'obtention (329, 429) de N chaînes cBv(i)', d'obtention (330, 430) de N chaînes cBe(i) et de calcul (331, 431) des variables EU(i) sont mises en œuvre par le module de mise en correspondance (4), qui envoie les informations à la partie d'authentification (3) pour mettre en œuvre les étapes de calcul (333, 433) de N chaînes dif_sU(i).

11. Procédé selon l'une quelconque des revendications 9 à 10, dans lequel la partie d'authentification (3) est un authentificateur ou un identificateur :
dans le cas où il s'agit d'un authentificateur, la mise en correspondance par :

   ◦ si le décodage des N chaînes dif_sU(i) n'est pas possible, la conclusion (223, 334, 434) d'un échec de mise en correspondance ; et
   ◦ le calcul d'une distance de Hamming comme la somme des poids de Hamming des N chaînes dif_sU(i), si le résultat est supérieur au seuil Th, alors la conclusion (224, 335, 435) d'un échec de mise en correspondance, et sinon la conclusion d'un succès (225, 336, 436) de mise en correspondance ;
- dans le cas où il s'agit d'un identificateur, dans lequel plusieurs chaînes cBe(i) sont préalablement obtenues (205, 305, 405) comme modèle lors de la phase d'enrôlement, le procédé comprenant en outre les étapes consistant à :

   ◦ répéter les étapes de calcul (331, 431, 222, 333, 433) des variables EU(i) et dif_sU(i) pour chacune des multiples chaînes cBe(i) précédemment obtenues ;
   ◦ calculer de multiples distances de Hamming comme la somme des poids de Hamming des N chaînes *dif_sU(i)* calculées pour chacune des multiples chaînes cBe(i) ; et
   ◦ classer les chaînes cBe(i) en fonction de leurs distances de Hamming.

12. Procédé selon l'une quelconque des revendications 9 à 11, comprenant en outre les étapes consistant à générer un ensemble de chaînes mA(i) en choisissant un nonce comme chaîne binaire, à chiffrer lesdites chaînes mA(i) avec KUA, à envoyer (213, 313, 413) les chaînes chiffrées au client et à recevoir des chaînes chiffrées mU(i) du client, à déchiffrer ladite chaîne en mU(i)' et à appliquer les deux aux N chaînes dif_sU(i), ce qui donne comme résultat

$$dif\_sU(i) = PQ.Decode(skA, EU(i) \; XOR \; mU(i)' \; XOR \; mA(i)) \; ;$$

si un cryptosystème basé sur un code est employé ; ou :

$$dif\_sU(i) = PQ.Decrypt(skA, EU(i)) \; XOR \; mU(i)' \; XOR \; mA(i) \; ;$$

si un système cryptographique basé sur un réseau est employé ; et dans lequel les N chaînes cBv(i) sont calculées par le client comme :

$$cBv(i) = PQ.Encode(pkA, eUv(i)) \; XOR \; mU(i) \; XOR \; mA(i)'$$

si un cryptosystème basé sur un code est employé ou :

$$cBv(i) = PQ.Encrypt(pkA, eUv(i) \; XOR \; mU(i) \; XOR \; mA(i)')$$

si un système cryptographique basé sur un réseau est employé ; dans lequel mA(i)' sont obtenus par le client en déchiffrant avec KUA' le mA(i) chiffré reçu.

13. Procédé selon l'une quelconque des revendications 9 à 12, dans lequel les algorithmes cryptographiques post-quantiques convenus utilisés sont un cryptosystème à clé publique basé sur un code utilisé pour protéger les données, choisi parmi un système Classic McEliece ou un système BIKE, de sorte que les algorithmes de codage, PQ.Encode, et de décodage, PQ.Decode, correspondent aux algorithmes de codage et de décodage de ces cryptosystèmes.

14. Procédé selon l'une quelconque des revendications 9 à 12, dans lequel les algorithmes cryptographiques post-quantiques convenus utilisés sont un système cryptographique à clé publique basé sur un réseau employé pour protéger les données biométriques, choisi parmi un cryptosystème Crystals-Kyber ou un cryptosystème Saber, de sorte que les algorithmes de chiffrement, PQ.Encrypt, et de déchiffrement, PQ.Decrypt, correspondent aux algorithmes de chiffrement et de déchiffrement de ces cryptosystèmes.

**15.** Système cryptographique comprenant :

- un dispositif fonctionnant en tant que client (1), configuré pour mettre en œuvre les étapes du procédé pour protéger des informations sensibles selon l'une quelconque des revendications 1 à 4,
- une base de données (2), qui peut être un registre distribué,
- un serveur fonctionnant en tant que partie d'authentification (3), authentificateur ou identificateur, configuré pour mettre en œuvre les étapes de la partie d'authentification (3) selon les revendications 9 à 14, ou configuré pour mettre en œuvre les étapes de l'identificateur (3) selon la revendication 11,
- un serveur fonctionnant comme un module de mise en correspondance (4), configuré pour mettre en œuvre les étapes du module de mise correspondance (4) selon la revendication 10.

Fig .1

Fig .2

Fig .3

Fig .4

Fig. 5